# EUROPEAN PATENT SPECIFICATION

(11) **EP 1 234 169 B1**
(45) Date of publication and mention of the grant of the patent: **13.02.2008**
(21) Application number: 00980818.9
(22) Date of filing: 27.11.2000
(51) Int. Cl.: G01N 21/25, G01N 21/77

(54) **PYROS KINETIX READER FOR CONDUCTING ASSAYS**
PYROS KINETIX LESEVORRICHTUNG ZUM DURCHFÜHREN VON VERSUCHEN
LECTEUR PYROS KINETIX POUR LA CONDUITE D'ESSAIS

(30) Priority: 26.11.1999 US 167618 P
(43) Date of publication of application: 28.08.2002
(73) Proprietor: Associates of Cape Cod, Inc., Falmouth, MA 02540 (US)
(72) Inventor: Shinn, Alan, Berkeley, CA 94703 (US); Fan, Chiko, San José, California 95117 (US); Elias, Elias, R., Milton, MA 02186 (US); Novitsky, Thomas J., Teaticket, MA 02536 (US); Dawson, Michael E., East Falmouth, MA 02536 (US); Richardson, Keith W., Woods Hole, MA 02543 (US)
(74) Representative: Brykman, Georges
(86) International application number: PCT/US2000/032354
(87) International publication number: WO 2001/038854

(56) References cited:
- WO-A1-95/17663
- DE-A1- 19 647 644
- US-A- 3 882 318
- US-A- 4 406 547
- US-A- 4 412 742
- US-A- 4 936 682
- US-A- 5 415 839
- US-A- 5 439 647
- US-A- 5 724 151
- US-A- 5 745 231

## Description

### CROSS-REFERENCE TO RELATED APPLICATIONS

This application claims the benefit of U.S. provisional application No. 60/167,618 filed November 26, 1999.

### BACKGROUND OF THE INVENTION

### Field of the Invention:

This invention is directed towards the Pyros Kinetix reader for conducting assays. More specifically, this invention is directed to providing an analytical device that, in one embodiment, conveniently and accurately assays both turbidity and chromogenic reactions in plural vessels.

### Discussion of the Background:

Optical techniques are commonly used to transduce a number of different chemical and biological parameters. Among many thousand such examples, turbidometric measurements can be used to bioassay and/or bioscreen for the presence of endotoxin using *Limulus* amebocyte lysate (LAL) such as PYROTELL-T (Associates of Cape Cod, Falmouth, MA). Similarly, chromogenic measurements can be used to bioassay and/or bioscreen for the presence of endotoxin using the POLYCHROME chromogenic formulation of LAL (Associates of Cape Cod, Falmouth, MA), which releases a yellow chromophore when exposed to endotoxin.

Many different instruments have been described that use optical techniques to transduce these and other such biological parameters. For example, Hoyt (US 4,936,682) describes an instrument for measuring the light absorption characteristics of a plurality of samples arranged in a substantially circular pattern about a single incandescent light source. Incandescent light sources are however only suitable for performing certain types of assays since their emission intensity is primarily in the IR and long wavelength portion of the visible spectrum. Moreover, incandescent light sources require intensity adjustments to maintain a relatively constant emission flux, have limited operational lifetimes, and, as a consequence of resistive heating of the filament, dissipate large amounts of heat that often complicate temperature control in incubators. Finally, since incandescent sources require relatively large amounts of power, they are commonly driven by high power AC sources such as line sources and microcontroller-based modulation of incandescent source intensity is relatively difficult to implement. Shirasawa (US 5,337,139) describes a multichannel optical measuring system which uses multiple branches of a quartz optical fiber to project light from mercury or xenon lamps at glass cuvettes that contain biological cell samples in order to perform fluorometric measurements. Shirasawa (US 5,337,139) also describes that a light emitting diode (LED)/photodiode pair can be associated with each glass cuvette to generate a signal related to the intensity of transmitted light through the cuvette. Mioduski (US 3,882,318) describes a reaction block configured to hold a reaction chamber where a specimen and a test reagent are mixed. The reaction block has two optical paths therethrough, one for conducting a transmittance measurement of the specimen/test reagent mixture, and the other to detect the presence of a reaction chamber within the block. Each reaction block has an associated printed circuit board for detecting light output from both paths. Noeller (US 4,784,947) describes a method for photographically recording fluorometric and nephelometric analyses performed using a photo-flash or a strobe light photon source. As both the light transduction and light generation described by Noeller (US 4,784,947) only occurs at discrete times, continuous monitoring and automated data analysis is not possible.

Hereunder are analysis of four other prior art documents.

WO 95/17663 describes a spectrophotometer and a printed circuit board for use therein. Said printed circuit board has a first circuit capable of generating an electrical current signal and a second circuit responsive to a light sensor. The light sensor in the second circuit measures a characteristic of the light received and is activated to take a measurement by the electrical current signal. The printed circuit board may be used in a spectrophotometer for measuring the light characteristics of a sample placed within a channel of the spectrophotometer.

US-A-5 724 151 describes a waveguide sensing element for use in a sample medium and a method of rear-fitting electromagnetic radiation. Said waveguide sensing element has a substrate having an input opening adapted to house an input optical fiber and an output opening adapted to house an output optical fiber. The input optical fiber transmits electromagnetic radiation, and the output optical fiber emits the electromagnetic radiation. The waveguide sensing element also has a guiding layer disposed adjacent the substrate. The guiding layer has a bevelled end face. The angle of the bevel is chosen so that the guiding layer selects only those modes within a given range - i.e. high order modes.

DE 19647644 describes a micromechanical transmission measuring cell and a reactor for sample fluid. Said transmission measuring cell determines the optical absorption of the sample fluid. A light passage opening introduces light in the container. A reflector unit aligns the light in such a manner, relative to the container, that a large part of the light passes through the container, without multiple reflections at a wall of the container. The substrate is made of silicon. The container has an elongated shape. The container is closed by a cover. The reflector unit is a wall, inclined relative to the longitudinal direction of the container. A beam transformation of fed light is effected by a lens whilst a further lens effects the reserve operation.

US-A-5 439 647 describes a chip level waveguide sensor. Said waveguide sensor is formed on a chip package which contains at least one source and at least one detector. Simple waveguide elements are mounted on the chip. Waveguide defining elements can also be formed integrally with the chip package so that simple waveguide bodies can be inserted or removed.

### SUMMARY OF THE INVENTION

The invention relates particularly to an assay device as claimed in claim 1 and to a method for performing assays as claimed in claim 39.

Accordingly, one object of this invention is to provide a novel method and device for conducting assays.

Another object of this invention is to provide a novel method and device that, in one embodiment, allows a user to simultaneously assay both turbidity and chromogenic reactions in plural vessels.

Another object of this invention is to provide a novel method and device that, in one embodiment, allows a user to conduct several assays simultaneously, each assay not necessarily having a same start time.

Another object of this invention is to provide a novel method and device that, in one embodiment, reduces device component and assembly costs, minimizes the size of the device, makes repair easier.

Another object of this invention is to provide a novel method and device that, in one embodiment, allows a user to incubate plural assays in plural vessels using a minimum of power while maintaining a desired incubation temperature.

These and other objects of the invention are obtained by our invention as claimed notably in claims 1 and 39. They can be realized by using a PYROS KINETIX READER and similar devices. Such devices can include, according to one embodiment, a single LED source providing illumination to plural vessels through a radial waveguide. Some embodiments can include two LED sources in a single device, each illuminating plural vessels along a different radial waveguide. Some embodiments can include more than two LED sources in a single device. Other embodiments can include one or more radial waveguides for presenting emitted light to the plural vessels at a high intensity. Other embodiments can present emitted light along two radial waveguides through a single vessel, the first radial waveguide being used to detect a presence of the vessel and the second radial waveguide being used to transduce an optical property of an analyte within the vessel. Some embodiments include modulation of the emission intensity of the one or more LED sources, this modulation being, e.g., a step function. In some embodiments, this modulation is microprocessor-based. In other embodiments, this modulation is mechanical, analog, or otherwise electronically implemented. In some embodiments, the LED source(s) emit substantially at 470 nm +/- 30 nm. In some embodiments, one or more optical filters is placed along an optical path that passes through the vessel.

Other embodiments of such devices can include the vessels arranged in a substantially circular geometry around the LED light source(s). Other embodiments may include plural groups of two or more vessels at two more different radii about a center. Another embodiment may include two groups of 48 vessels at two different radii about the center. In some embodiments, an LED is positioned at the center point. In some embodiments, one or more optical waveguides is used to substantially evenly distribute light from one or more LED's to several vessels. In some embodiments, a lens is used to position a virtual image of one or more LED's at the center. In some embodiments, multiple LED's are vertically staggered along a line passing through the center.

Other embodiments of such devices can include a single printed circuit board containing plural phototransducers. Some embodiments may include a single printed board having all phototransducers. Some embodiments provide plural vessels in a same plane, and a plane of such a single printed circuit board being substantially parallel to such a plane. Some embodiments provide a plane of such a single printed circuit board below at least one vessel. In some embodiments, a light pipe is used to guide light transmitted along an optical path through a vessel to such a single printed circuit board.

Other embodiments of such devices can include a multicomponent support for the vessels, a first component being chosen to conduct heat for incubating one or more vessels at a set temperature. In some embodiments, another component is chosen to thermally insulate the first component and reduce power demands of the device. In some embodiments, the other component is lighter that the first component and reduces the net weight of the device.

Other embodiments of such devices can include a precalibrated temperature transducer that reduces calibration demands for operating such a device.

The aforementioned and other objects of the invention can also be realized using methods that are simple to implement upon the PYROS KINETIX READER and other similar devices. A method for performing assays can involve generating light using a LED, radially guiding a portion of the generated light, transmitting a portion of the guided light through a plurality of vessels, and transducing a portion of the transmitted light to assay a sample. In some embodiments, a portion of the generated light can be transmitted through a side or a bottom portion of the plurality of vessels and used to detect the presence of the plurality of vessels. In other embodiments, a portion of the transmitted light can be reflected using a light pipe. In some embodiments, a portion of the generated light can be diverged. In other embodiments, the generated light can be modulated to yield a background measurement.

### BRIEF DESCRIPTION OF THE DRAWINGS

A more complete appreciation of the invention and many of the attendant advantages thereof will be readily obtained as the same become better understood by reference to the following detailed description when considered in connection with the accompanying drawings, wherein:
FIGS. 1A and 1B illustrate, respectively, a top view and a side view of an exemplary optical system according to the present invention;
FIGS. 2A, 2B, and 2C illustrate a side view of various light paths through an exemplary optical system without a sample holding vessel present, with a sample holding vessel present, and with a sample holding vessel present at an increased magnification;
FIGS. 3A and 3B illustrate, respectively, a top view and a side view of an exemplary embodiment of the optical system that includes a central light source with multiple wells;
FIGS. 4A and 4B illustrate, respectively, a top view and a side view of a second exemplary embodiment of the radial light guide **30**;
FIGS. 5A and 5B illustrate, respectively, a top view and a side view of an exemplary embodiment of the optical system that includes the second exemplary embodiment of the radial light guide **30**;
FIGS. 6A and 6B illustrate, respectively, a top view and a side view of a third exemplary embodiment of the radial light guide **30**;
FIGS. 7A and 7B illustrate, respectively, a top view and a side view of an exemplary embodiment of the optical system that includes the third exemplary embodiment of the radial light guide **30;**
FIG. 8 illustrates a schematic of a top view of an exemplary arrangement of a optical system that includes the third exemplary embodiment of the radial light guide **30**;
FIG. 9 illustrates an exemplary vessel support **80** containing two concentric circular rows of wells **45**, as well as various components to be entirely or partially inserted into the exemplary vessel support **80**;
FIG. 10 illustrates an exploded view of an assay device according to the present invention;
FIG. 11 illustrates a wireframe view of an exemplary assembled assay device;
FIG. 12 illustrates an exemplary electronics block diagram of an assay device;
FIGS. 13A-C illustrate a top view in the absence of an analyte holding vessel **40**, a top view in the presence of an analyte holding vessel **40**, and a side view in the presence of an analyte holding vessel **40** that uses an exemplary side wall tube detection scheme with a single radial light guide **30**;
FIG. 14 illustrates an exemplary process loop for monitoring and controlling the incubation temperature according to the present invention;
FIG. 15 illustrates a process flow for an exemplary on/off modulation of the light output by LED source **1** for background correction; and
FIG. 16 illustrates an exemplary computer system **801** that can form an external control/record processor in an embodiment of the present invention.

### DETAILED DESCRIPTION OF THE PREFERRED EMBODIMENTS

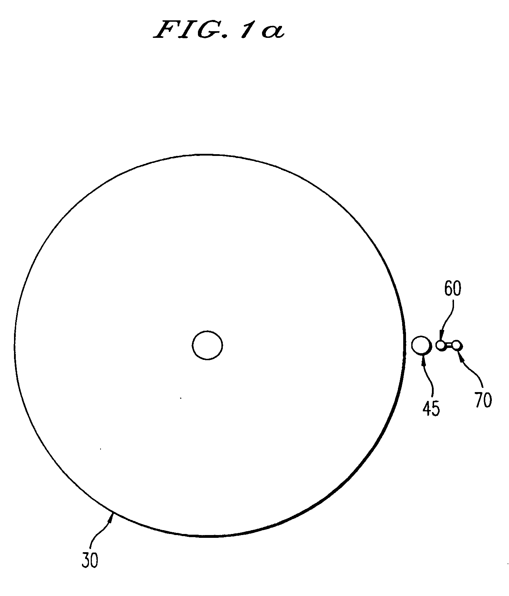

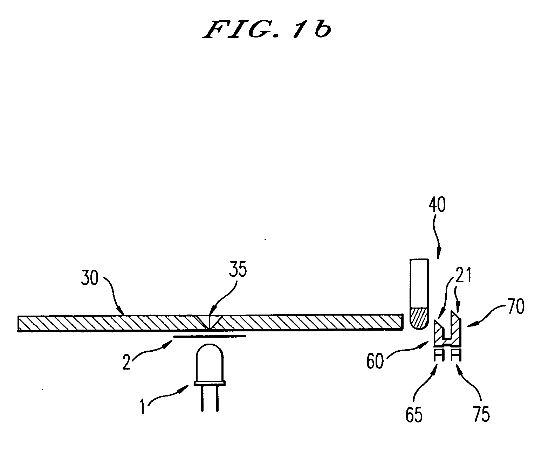

Referring now to the drawings, wherein like reference numerals designate identical or corresponding parts throughout the several views, and more particularly to FIG. 1 thereof, which illustrates an exemplary optical system according to the present invention. The illustrated optical system generates light, radially guides it to one or more vessels containing an analyte, transmits the light through the vessel and/or the analyte, and then pipes the light to one or more light transducers where it is transduced. As used herein, radial guiding refers to the transmission of light to plural vessels along plural optical paths, wherein the transmittance along the various paths is substantially equal. This situation is possible to implement using a circular (or arcular) waveguide with a source located at the center, hence giving rise to the term "radial guiding."

In FIGS. 1A and 1B, LED source **1** generates and emits photons, and can also optionally serve to collimate and/or focus the generated photons. Examples of commercially available LED's that can form the LED source **1** are the Nichia P/N NSPB500S, the Kingbright P/N L934MBC, and the Hewlett-Packard P/N HLMP-CB16. LED's generate relatively large photon fluxes over relatively narrow bandwidths, especially relative to incandescent sources which emit over a very large bandwidth. In one embodiment, LED source **1** can generate photons centered around substantially 470 nm with a bandwidth +/- 30 nm, although those skilled in the art can increase or decrease the center wavelength and the bandwidth surrounding it to provide different responses. Naturally, plural LED's may be used along with multiple versions of the illustrated optical system in the same assay device. In such a case, LED's with different center wavelengths and/or intensities may be selected to, e.g., provide broader dynamic range for assays, allow dual wavelength assays to, e.g., increase sensitivity and/or allow a user to use plural chromophores and/or obtain better background correction information.

Also illustrated in FIG. 1B is an optical filter **2** between the LED source **1** and the radial waveguide **30**. The filter **2** is optional; since a LED emission spectrum is already relatively narrowband, it is often not necessary to include filter **2**, which further lowers the cost and power requirements of the optical system. However, in some applications that have precise wavelength requirements, such as spectroscopic analyses or chromogenic assays of complex samples, a filter **2** may be desirable.

In the illustrated embodiment, light emitted by LED source **1** is guided radially by a radial light guide **30** that includes a light coupling total internal reflection (TIR) cone **35** for coupling the emitted light into the radial light guide **30**. As illustrated, light coupling TIR cone **35** is centered within the radial light guide **30** and substantially above the LED source **1**. In such a geometry, light emitted by LED source **1** is substantially evenly transmitted from the center of light guide **20** toward the perimeter of radial light guide **30**. Radial light guide **30** can be formed of, e.g., acrylic cast into a mold that forms light coupling TIR cone **35**. The radial light guide **30** with a light coupling TIR cone **35** allows a 20 to 100 mW LED source **1** to provide as much illumination to the analyte holding vessel **40** as a 20 W incandescent bulb.

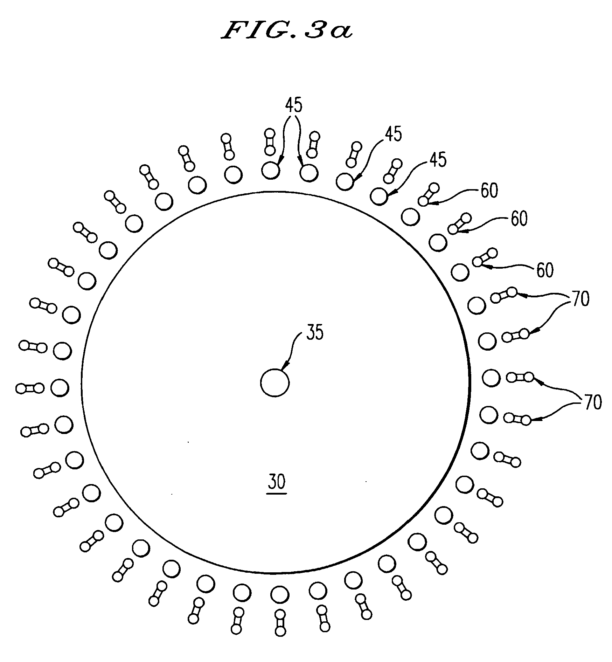

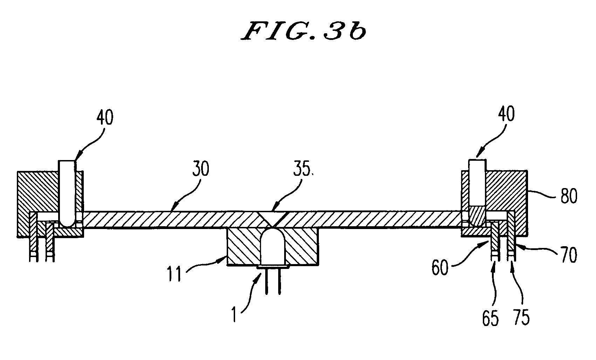

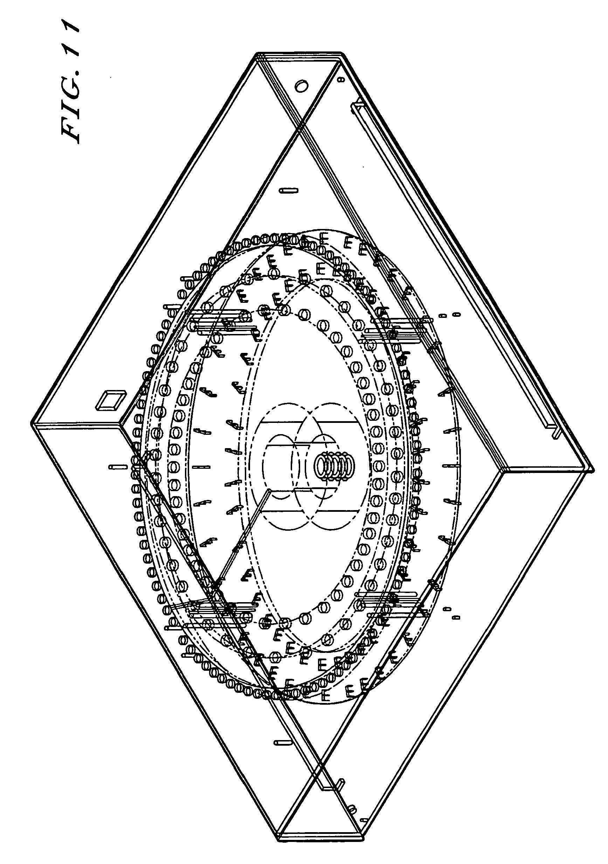

A single well **45** configured to support an analyte holding vessel **40** is illustrated beyond the perimeter of the radial light guide **30**. Naturally, it is both possible and desirable to use plural wells **45** and analyte holding vessels **40** (not shown). The distribution of such wells **45** relative to the radial light guide **30** will be discussed further in, e.g., FIGS. 3 and 11. The illustrated well **45** is configured to support an analyte holding vessel **40** that is a test tube, although other suitable vessels, such a optical cuvettes and capillaries, may be used. It is only important that analyte holding vessel **40** be sufficiently transparent over the emission spectrum of LED source **1** to perform the desired assay.

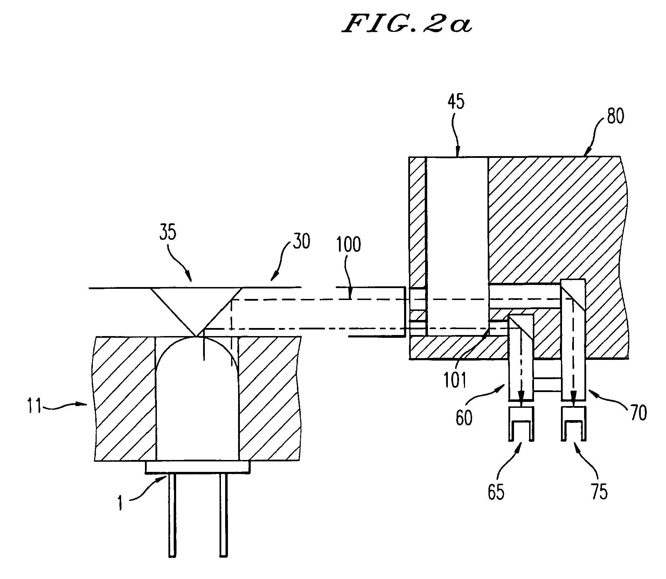

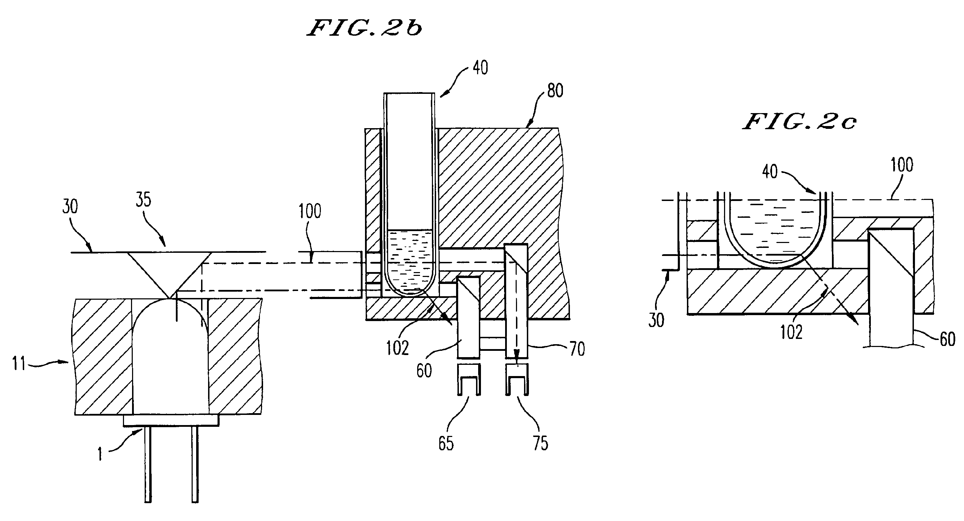

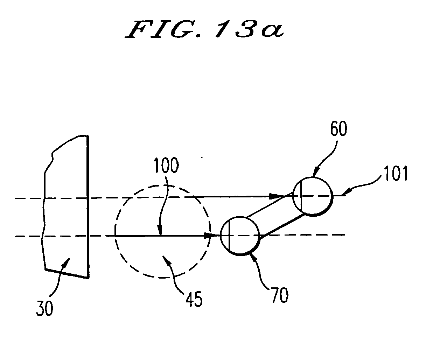

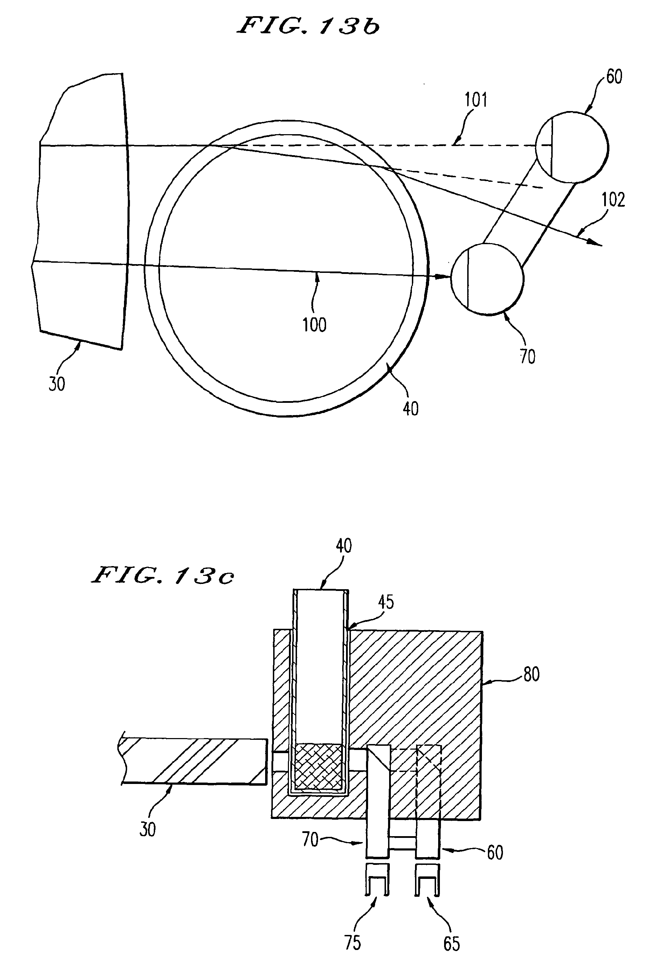

The exemplary optical system of FIG. 2 also includes a pair of light pipes **60** and **70** along a pair of paths that join the real or virtual position of the LED source **1** and some point in or on an analyte holding vessel **40** in the well **45**. The pair of light pipes **60** and **70** neighbor the well **45**. Light transmitted through the well **45** is incident upon the pair of light pipes **60** and **70** (provided no analyte holding vessel **40** is present), and reflected in a direction determined by the orientation of a total internal reflection (TIR) surface **21**. The pair of light pipes **60** and **70** thus allow an optical transducer to be located away from a straight line path that join the real or virtual position of the LED source **1** and some point in or on the analyte holding vessel **40** in the well **45**. This is desirable in the interest of simplifying device design, limiting the number of harness connections, decreasing the cost of the device, and simplifying maintenance and repair. As illustrated, the light receiving portion of light pipe **60** is located along a path that joins the real or virtual position of the LED source **1** and a point on the bottom curvature of an analyte holding vessel **40** positioned in the well **45**. When an analyte holding vessel **40** is present in well **45**, light passing along this line through the radial light guide **30** is significantly deflected out of this path due to refraction by the analyte holding vessel **40**, and a light transducer **65** located at the output of light pipe **60** can easily detect the insertion and/or removal of analyte holding vessel **40** by monitoring the intensity of the received light. Absorption and/or reflection of the light that passes along this path can also decrease the intensity of the received light and detect the presence of an analyte holding vessel **40** in well **45**. Alternatively, the light receiving portion of light pipe **60** can be located along a path that joins the real or virtual position of the LED source **1** and a point on the side curvature of the analyte holding vessel **40** to obtain a similar sensitivity, as further illustrated in FIGS. 13A-C.

Light pipe **70**, on the other hand, is preferably located along a light path that joins the real or virtual position of the LED source **1** and a point near the center of an inserted analyte holding vessel **40**, but away from the bottom. As such, a relatively long pathlength through the analyte holding vessel **40** is examined and refraction (due to, e.g., tubular analyte holding vessels 40) is minimized.

In the illustrated embodiment of FIG. 1B, both light pipes **60** and **70** receive light from a same radial light guide **30**. This is not necessarily the case. For example, two different radial light guides **20** can each transmit light to a single respective light pipe **60** and **70**. Moreover, in the case of plural test wavelengths, even three or more different radial light guides 20 can be used with associated light pipes.

In the illustrated embodiment, both TIR surfaces **21** reflect light downward, substantially at right angles relative to the respective path of that light through the analyte holding vessel **40**. This is preferred, since no tilting and/or stoppering of the analyte holding vessel **40** is required and the light transducers **65** and **75** for multiple analyte holding vessels **40** can be positioned in a single printed circuit board located below and substantially parallel with the radial light guide **30**. Naturally, in some embodiments of the invention, the TIR surfaces **21** and pair of light pipes **60** and **70** can be eliminated in whole or in part, although this will often require the placement of the light transducers **65** and **75** for multiple analyte holding vessels **40** upon multiple printed circuit boards. At the output of the pair of light pipes **60** and **70**, a pair of light transducers **65** and **75** can be used to determine the transmissivity of both optical paths. Suitable, commercially available light transducers **65** and **75** include photodiodes such as the Centrovision P/N BPW-34, Hamamatsu P/N S4707-01, Hamamatsu P/N S3407-01, UDT Sensors P/N BPW34, UDT Sensors P/N BPW34B, Infinion P/N BPW34, Infinion P/N BPW34 B, and the Perkin Elmer P/N VTD34.

A further illustration of side views of various light paths **100, 101**, and **102** through an exemplary optical system with and without a sample holding vessel present is provided in FIGS. 2A, 2B, and 2C (albeit at higher magnification). In FIG. 2A, photons generated at the LED source **1** are reflected by the light coupling TIR cone **35** and carried along radial light guide **30** to a vessel support **80** that may or may not support an analyte holding vessel **40** therein. If an analyte holding vessel **40** is not supported by the a particular well **45** of the vessel support **80**, then the light path **101** will conduct a relatively high intensity of light to light pipe **60**, which in turn conducts the light to light transducer **65**. On the other hand, if a (filled) analyte holding vessel **40** is supported by a particular well **45** of the vessel support **80**, then light originally on light path **101** is deflected along light path **102**, and a relatively low intensity of light is received at light pipe **60** and light transducer **65**. Thus, by measuring an intensity of the light received at light transducer **65**, the presence of an analyte holding vessel **40** in a well **45** of the vessel support **80** can be made.

FIG. 2C illustrates a side view of various light paths through an exemplary optical system with a sample holding vessel present at an increased magnification. As illustrated, light that has passed through the radial light guide **30** is directed downward due to refraction caused by the base of an analyte holding vessel **40** in a well **45** of the vessel support **80**. Refraction need not be the physical origin of the decreased light intensity received at light guide **60**. For example, reflection and/or absorption can also cause reduced light transmission to light guide **60**.

As illustrated in FIGS. 2A, 2B, and 2C, since light path **100** is incident upon a position substantially at the middle of analyte holding vessel **40**, the direction of light path **100** remains substantially unchanged by the presence of analyte holding vessel **40**. Naturally, the intensity of light transmitted along light path **100** will change, and this intensity change will be used to assay the contents of analyte holding vessel **40**.

Also illustrated in FIG. 2A and 2B is a positioning sleeve **11** arranged about the LED source **1.** The positioning sleeve **11** serves to accurately center LED source **1** directly under light coupling TIR cone **35**, ensuring substantially uniform radial illumination by light guided through radial light guide **30**.

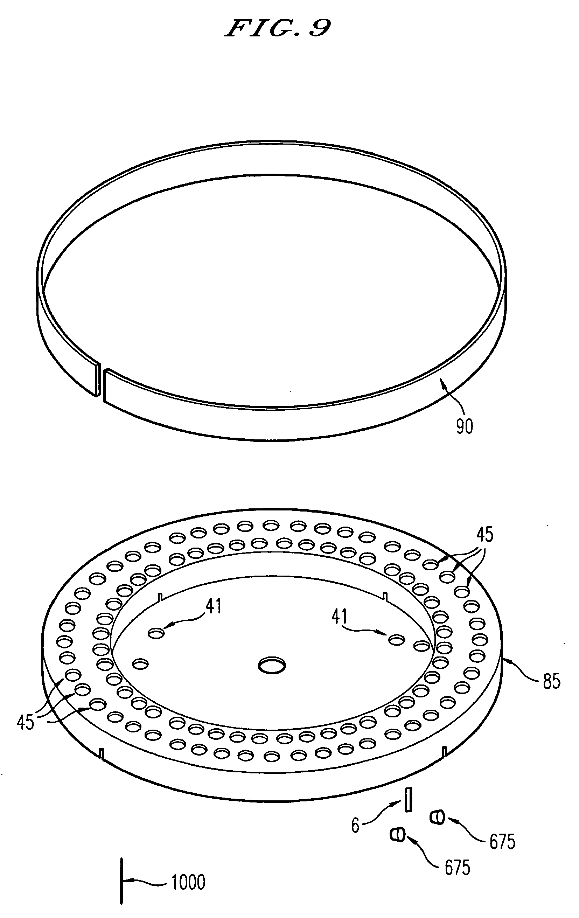

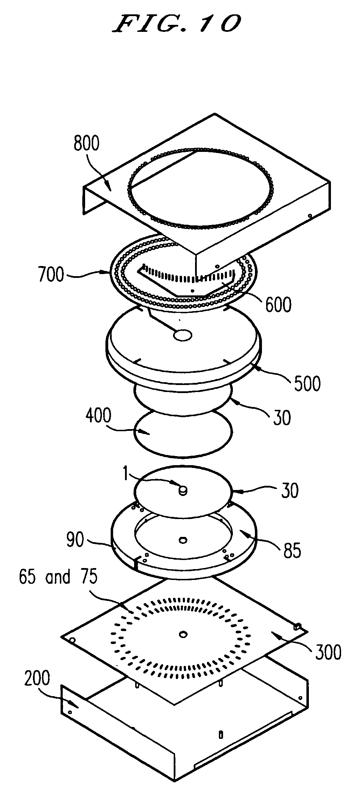

FIGS. 3A and 3B illustrate, respectively, a top view and a side view of an exemplary embodiment of the optical system that includes a central light source with multiple wells **45** of the vessel support **80** for holding multiple analyte holding vessels **40**. In the illustrated embodiment, the multiple wells **45** are arranged radially about the light coupling TIR cone **35** of the radial light guide **30**. As such, the multiple wells **45** of the vessel support **80** receive substantially equal radiant fluxes from the LED source **1**. Moreover, if the vessel support **80**, is radially symmetric, this radial symmetry can be exploited to maintain all wells **45** of the vessel support **80** at a substantially equal temperature. For example, if the vessel support **80** includes a ring made of a thermally conducting material (e.g., a metal such as aluminum or copper such as heat conducting block **85** shown in e.g., FIG. 10), then a heater ring (such as heater **90** shown in e.g., FIG. 10) can be disposed just inside and/or outside of the vessel support **80** and all wells **45** of the vessel support **80** will be maintained at a substantially equal temperature. Thus, even if the absolute incubation temperature is subject to errors due to, e.g., thermal fluctuations and/or miscalibrated equipment, then accurate differential measurements across samples within different wells **45** of the vessel support **80** will still be possible. Both the heating of and disposition of wells **45** within the vessel support **80** will be discussed in more detail in regard to FIG. 9.

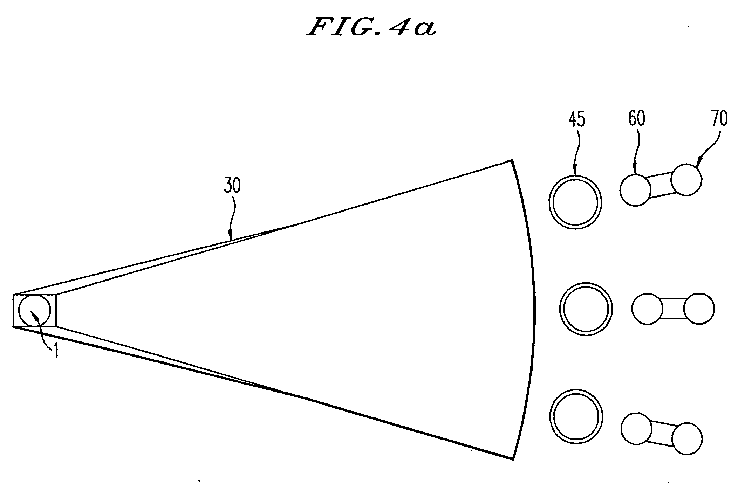

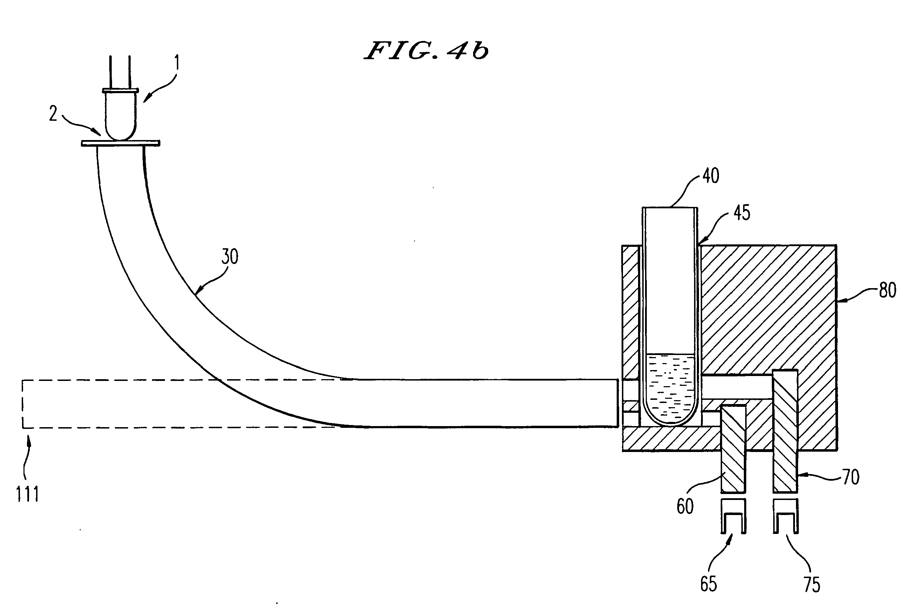

FIGS. 4A and 4B illustrate, respectively, a top view and a side view of a second exemplary embodiment of the radial light guide **30**, namely a curved wedge lightguide. As with the radial light guide **30** of FIGS. 1A and 1B, the radial light guide **30** of FIGS. 4A and 4B guides light emitted by LED source **1** (optionally passing through a light filter **2**) radially to multiple wells **45** within the vessel support **80**. With curved wedge waveguides, plural LED sources can be vertically staggered, and the light illuminating the analyte holding vessels **40** in wells **45** appear to originate from a single, central source **111.** The radial light guide **30** of FIGS. 4A and 4B is particularly useful for several different reasons. For example, by reducing the total number of wells **45** that are illuminated by a particular LED source **1**, then the intensity per well **45** is increased. This effect can be augmented by collecting and/or focusing light upon the end of radial light guide **30** using, e.g., lenses and spherical and/or parabolic reflectors (not shown). The increased light intensity per well **45** is particularly useful when, e.g., assaying samples with a low transmittance. Another reason that the radial light guide **30** of FIGS. 4A and 4B is particularly useful is that several such light guides and LED sources **1** may be used in a single device for conducting assays. This broadens the range of available assays that may be performed upon the analyte holding vessels **40** in vessel support **80**. For example, some wells **45** of the vessel support 80 may be dedicated to assaying for one chromophore, while other wells **45** may be dedicated to assaying for another chromophore that has a different absorption spectrum. Since different LED sources **1** can be used to sample separate groups of wells **45**, each chromophore can be probed at a wavelength for which it has a near-maximum response (e.g., absorbance), and an increased sensitivity to each chromophore can be achieved. Moreover, different filters can be inserted between each of the LED sources **1** and the radial light guides **30**.

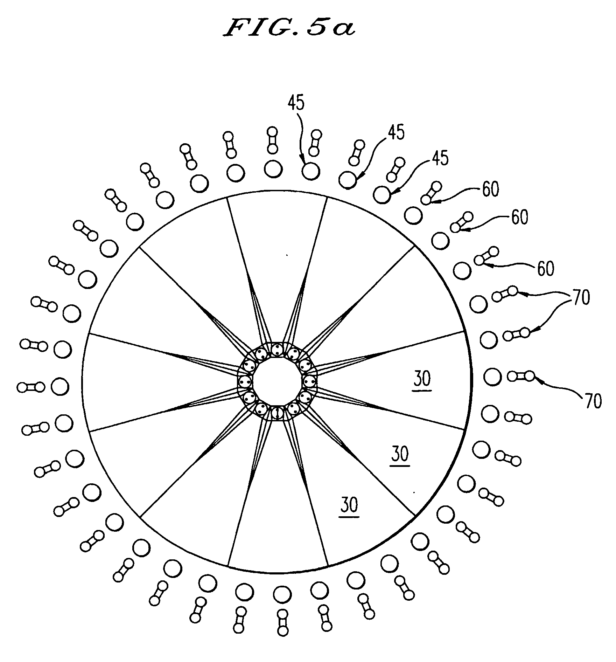

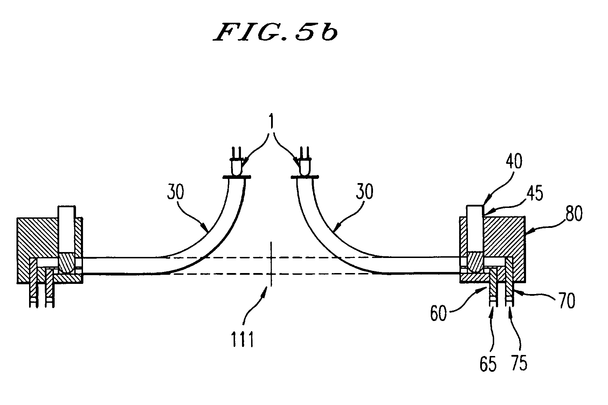

FIGS. 5A and 5B illustrate, respectively, a top view and a side view of an exemplary embodiment of the optical system that includes the second exemplary embodiment of the radial light guide **30**. Plural LED sources **1** are available in this optical system, and light emitted by these LED sources 1 is substantially evenly distributed along the perimeter of radial light guide **30** due to the symmetric arrangement of plural versions of the second exemplary embodiment of the radial light guide **30** about a central axis. As described before, the plural LED sources **1** can have similar or different emission spectra, as desired.

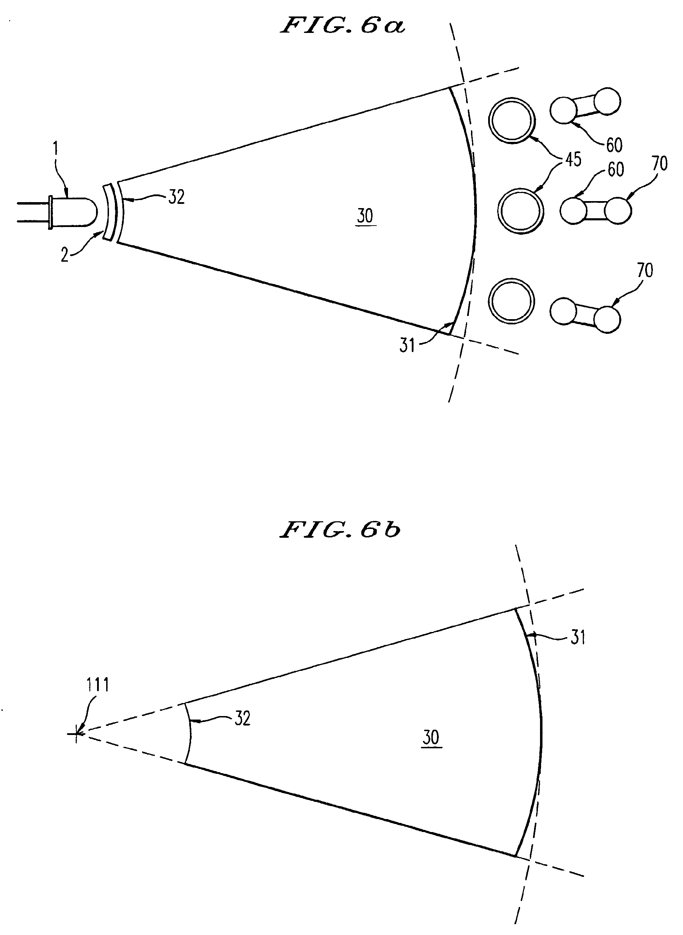

FIGS. 6A and 6B illustrate, respectively, a top view and a side view of a third exemplary embodiment of the radial light guide **30**, namely a lensmatic wedge lightguide. As with the radial light guide **30** of FIGS. 1A and 1B, the radial light guide **30** of FIGS. 6A and 6B guides light emitted by LED source **1** (optionally passing through a light filter **2**) radially to multiple wells **45** within the vessel support **80**. However, the lensmatic wedge lightguide has at least one of the light coupling face **32** (where light is received from the LED source **1**) and a light decoupling face **31** (where light is transmitted to the analyte holding vessels **40** in wells **45**) with a radius of curvature that is smaller than the radius of the one or more concentric rows of wells **45** in the vessel support **80** for the analyte holding vessels **40**. The lensmatic wedge lightguide version of the radial light guide **30** thus can be designed to create a virtual image **111** of the LED source **1** directly at the center point of the radius of one or more concentric rows of wells **45** in the vessel support **80**. Once again, substantially even radial distribution of light emitted by plural LED sources **1** can be assured, even though these sources do not occupy the same physical space.

The third embodiment (lensmatic wedge) radial light guide **30** of FIGS. 6A and 6B is particularly useful for reasons similar to those described in regard to the second embodiment (curved wedge) of the radial light guide **30** of FIGS. 4A and 4B. For example, by reducing the total number of analyte holding vessels **40** that are illuminated by a particular LED source **1**, then the intensity per analyte holding vessel **40** is increased. This effect can be augmented by collecting and/or focusing light upon the end of radial light guide **30** using, e.g., lenses and spherical and/or parabolic reflectors (not shown). The increased light intensity per analyte holding vessel **40** is particularly useful when, e.g., assaying samples with a low transmittance. Another reason that the third embodiment (lensmatic wedge) radial light guide **30** of FIGS. 6A and 6B is particularly useful is that several such lightguides and LED sources **1** may be used in a single device for conducting assays. This broadens the range of available assays that may be performed upon the analyte holding vessels **40** in vessel support **80**. For example, some wells **45** of the vessel support **80** may be dedicated to assaying for one chromophore, while other wells **45** may be dedicated to assaying for another chromophore that has a different absorption spectrum. Since different LED sources **1** can be used to sample separate groups of wells **45**, each chromophore can be probed at a wavelength for which it has a maximum absorbance, and an increased sensitivity to each chromophore can be achieved. Moreover, different filters can be inserted between each of the LED sources **1** and the radial light guides **30**.

In contrast with the second embodiment (curved wedge) radial light guide **30** of FIGS. 4A and 4B, multiple copies of the third embodiment (lensmatic wedge) radial light guides **20** of FIGS. 6A and 6B can be maintained in a substantially single plane. As such, it is easier to stack multiple layers of the third embodiment (lensmatic wedge) radial light guides **20** so that each well **45** in vessel support **80** can be assayed by a user-selected wavelength independent of the location of well **45**. A single well **45** may also be assayed at multiple wavelengths using this approach by, e.g, multiplexing the transmission wavelength through a single well **45** by shifting the phase of an on/off modulation for different LED sources **1** stacked atop one another but illuminating a single well **45**. The stacking of multiple layers of the third embodiment (lensmatic wedge) radial light guides **20** can be accompanied by the addition of further light pipe(s) and transducer(s) (sensitive to the wavelength(s) of the further LED sources **1**) so that complete additional, independent, optical channels can be formed. Finally, lensmatic wedge radial light guides **20** are relatively easy to make.

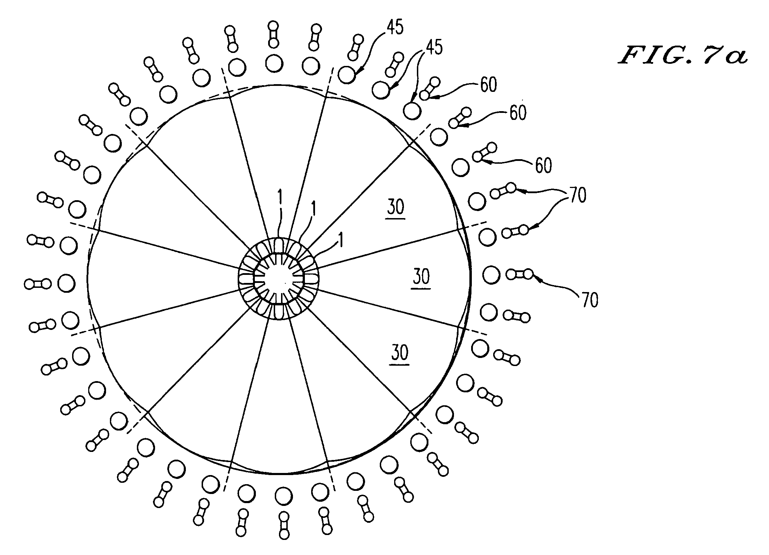

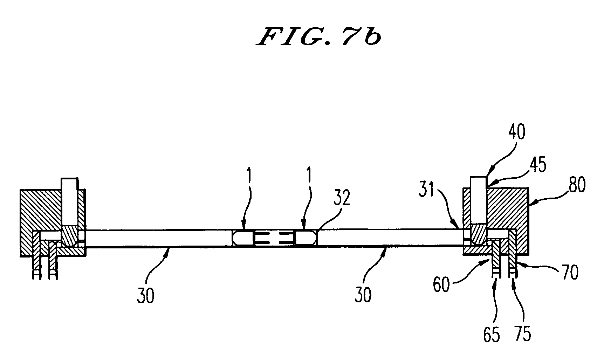

FIGS. 7A and 7B illustrate, respectively, a top view and a side view of an exemplary embodiment of an optical system that includes the third exemplary embodiment of the radial light guide **30**, namely the lensmatic wedge. Similarly to FIGS. 5A and 5B, plural LED sources **1** are available in this optical system, and light emitted by these LED sources **1** is substantially evenly distributed along the perimeter of radial light guide **30** due to the symmetric arrangement of plural versions of the third exemplary embodiment of the radial light guide **30** about a central axis. As described before, the plural LED sources **1** can have similar or different emission spectra, as desired.

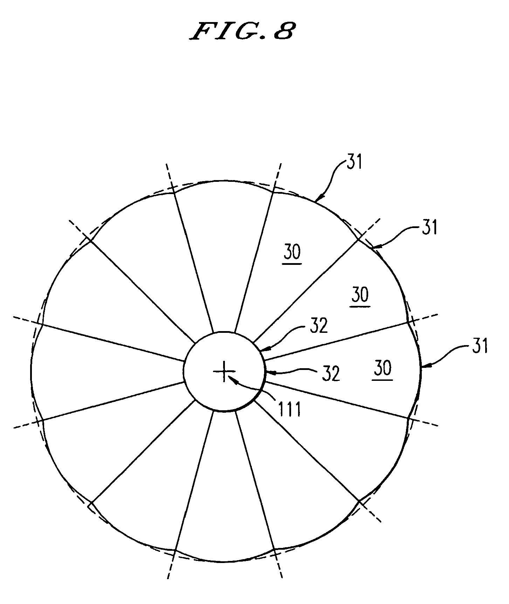

FIG. 8 illustrates a schematic of a top view of an exemplary arrangement of a optical system that includes the third exemplary embodiment of the radial light guide **30**, namely the lensmatic wedge. This is presented to emphasize that, in this case, all radial light guides **20** can form a virtual image **111** of a respective LED source **1** at a point central to all wells **45** of the vessel support **80**.

FIG. 9 illustrates an exemplary heat conducting block **85** from a vessel support **80** that contains two concentric circular rows of wells **45**. Also shown are a heater ring **90**, a temperature transducing thermistor **1000**, a fixing dowel pin **6**, O-rings **41**, and dual light pipes **675**. The heat conducting block **85** contains two concentric circular rows of wells **45** configured to support an inserted analyte holding vessel **40** (not shown). By using two concentric circular rows of wells **45**, the capacity of the instrument (i.e., number of wells **45**) can be increased. This allows for the parallel assaying of multiple analyte holding vessels **40** without an unwieldy increase in the dimensions of the vessel support **80**. In one embodiment, there are **96** wells **45** within a single vessel support **80**, distributed in two concentric circular rows.

In the illustrated embodiment, the wells **45** are relatively deep and a significant portion of an inserted analyte holding vessel **40** can be enclosed within each well **45**. Thus, cross bores (not shown) directed radially through the vessel support **80** are necessary to allow the transmission of light through the vessel support **80** to the wells **45** and light pipes **60** and **70**.

The exemplary vessel support **80** also includes a heater ring **90** that surrounds the heat conducting block **85**. By maintaining radial symmetry about a central axis for both the heater ring **90** and the wells **45** in the heat conducting block **85**, a relatively equal temperature can be maintained at each well **45** in a single row. As such, even if absolute temperature control is ineffective, accurate differential measurements across analyte holding vessels **40** incubated in a same row can be made. In one embodiment, heater ring **90** is formed from a low power, DC heater. The power supply for such a heater ring **90** can be placed under microprocessor control and, given that the supply is DC, a source of AC electrical noise within the device for assays is eliminated.

The exemplary vessel support **80** also includes a temperature transducing thermistor **1000** that is favorably disposed in contact with or within the heat conducting block **85**. The temperature transducing thermistor **1000** can be used to generate a control signal used for the closed loop control of the temperature of heat conducting block **85**. A suitable, commercially available thermistor **1000** is the P/N QT06002-128 REV A from Quality Thermistor, Inc. For example, if the temperature transducing thermistor **1000** indicates that the temperature of the heat conducting block **85** has dropped below a predetermined (and possibly operator-set) temperature, then increased power can be presented to heater ring **90**, and the temperature of the heat conducting block **85** increased. In some embodiments of the device, assay incubation temperature is maintained at 37° ± 0.1°C using a calibrated thermistor with a +/- 0.1°C accuracy. The look-up table for the temperature transducing thermistor **1000** is stored in a memory, and the temperature transducing thermistor **1000** is read every 3 seconds via a 12 bit A/D converter. This digital signal corresponds to the control signal for the feedback loop, and a microcontroller increases power applied to the heater when the apparent temperature drops below 36.9°C and decreases applied power when the apparent temperature exceeds 37.1°C.

The exemplary vessel support **80** can also include an O-ring **41** that can be sandwiched in each well **45.** An O-ring **41** so disposed along the interior of well **45** provides enough resistance to falling such that an analyte holding vessels **40** that is placed into a well **45** will not drop and splash the analyte. Moreover, such O-rings **41** are inexpensive and replaceable.

The exemplary vessel support **80** can also include an dual light pipe **675** that includes each of light pipes **60** and **70** inserted into the base of heat conducting block **85**. Dual light pipe **675** can be used to maintain a constant spatial relationship between each of light pipes **60** and **70**.

Finally, the exemplary vessel support **80** can also include a fixing dowel pin 6 that can be inserted into heat conducting block **85** used to fix the relative angular position of the heat conducting block **85** relative to any support or cover therefor.

FIG. 10 illustrates the assembly of an assay device according to the present invention. The device for assays is enclosed within a base **200** and a cover **800** that protect the optical and electronic components from, e.g., dust, water splashes, and other environmental hazards. In the illustrated embodiment, all light transducers **65** and **75** are arranged on a single printed circuit board assembly **300** to receive light output from a respective light pipe **60** or **70**. Some or all electronic signal processing elements can be located on a single printed circuit board assembly **300**, such as, e.g., timing elements, A/D converters, channel multiplexers, electrical filters, switches, and/or buffers. Either a raw or a processed (e.g., sampled and filtered) output from the individual light transducers **65** and **75** can be relayed to an external control/record processor by way of a multi-pin bulkhead connector (not shown) affixed to, e.g., the side wall of base **200**. Naturally, plural printed circuit board assemblies **300** can be used in some embodiments of the invention.

Depending upon the thickness of heat conducting block **85**, one or more LED source(s) **1** and radial waveguide(s) **30** can be disposed substantially concentrically within heater **90** and heat conducting block **85**. If heat conducting block **85** is relatively thick, then one or more of the light paths **100** and **101** can pass through heat conducting block **85**. This can be accomplished by boring radial holes to transmit the light emitted from radial waveguide(s) **30** through an analyte holding vessel **40** in a well **45** to a respective light pipe **60** or **70** which is affixed within heat conducting block **85**. The respective light pipe **60** or **70**, which can be fixed within a hole bored into the heat conducting block **85** in an axial direction, can then transmit the light to the respective light transducer **65** or **75** on printed circuit board assembly **300**. As mentioned before, if further optical channels capable of making measurements upon a single analyte holding vessel **40** in a well **45** are added, then additional light pipes and light transducers can be added, as needed.

The illustrated device for assay has two separate radial waveguides **30** according to the first described embodiment, one which transmits light along light path **100** for assaying and one which transmits light along light path **101** for detecting an analyte holding vessel **40**. Naturally, other numbers and types of radial waveguides **30** are available under the current invention. Moreover, one or more radial waveguide(s) **30** can be disposed such that they transmit light above heat conducting block **85** to a respective light pipe **60** or **70**, which may or may not be affixed within the heat conducting block **85**. In such a case, it may be desirable to optically isolate the individual analyte holding vessels **40** by interposing an opaque sheet between neighboring analyte holding vessels **40**.

The two separate radial waveguides **30** are themselves optically isolated from one another through an optical separator **400**. Such an optical separator can be formed, e.g., from a thin metallic or polymeric piece that is substantially opaque in the wavelengths used by the respective one or more LED source(s) **1**.

In the illustrated embodiment, an insulating shell **500** is disposed and affixed atop the heat conducting block **85** and/or heater **90** to form vessel support **80**. The insulating shell **500** can serves multiple purposes. Firstly, by thermally isolating the heat conducting block **85** and/or heater **90**, the power requirements of the heater **90** can be reduced, and more uniform heating across the heat conducting block **85** can be obtained. Furthermore, even if insulating shell **500** were in physical contact with base **200**, then conductive thermal transport to base **200** can be minimized. Moreover, since the insulating shell **500** reduces the power requirements of heater **90** for maintaining a substantially constant incubation temperature, a DC heater **90** can be used, which is easily amenable to microprocessor-based control and eliminates background electrical noise by removing a high power AC component from the assay device. This is particularly beneficial when a printed circuit board assembly **300** contains some and/or all of the processing equipment, since the base **200** and a cover **800** can form, in some embodiments, a Faraday cage with only DC power feed lines for the internal electronic circuitry.

Another advantage of the insulating shell **500** is that it allows for the minimization of the thickness of the conducting block **85** within the vessel support **80**, and hence reduces the total weight of the instrument. For example, the insulating shell **500** can have a top face that is displaced from the conducting block **85** and holes (not shown) that support the analyte holding vessels **40** can be drilled through this top face. Thus, an analyte holding vessel **40** that is inserted into a well **45** is supported both at the conducting block **85** and at the insulating shell **500**. The use of an insulating shell thus allows for the minimization of the thickness of conducting block **85** in the vessel support **80** while maintaining support for an analyte holding vessels **40** with a minimal increase in weight, since insulating shell **500** can be made from, e.g., a polymer. An example material for the insulating shell **500** is DELRIN (acetal).

Yet another advantage of the insulating shell **500** is that it can serve to fix the position of other components, including the O-rings **41** and the radial light guide(s) **20**, relative to the conducting block **85** and wells **45**.

In the embodiment illustrated in FIG. 10, an indicator assembly layer including a cover **700** and an LED indicator assembly **600** is included between the insulating shell **500** and the cover **800**. Both the cover **700** and LED indicator assembly **600** can be used to provide a human operator with information regarding the wells **45**. For example, an alphanumeric denominator for each well **45** can be included upon the cover **700** and the LED indicator assembly **600** can be used, e.g., to indicate to an operator that the assay device considers that an analyte holding vessel **40** has been inserted into a particular well **45**. Thus, operator error due to incomplete and/or incorrect insertion of an analyte holding vessel **40** can be avoided.

FIG. 11 illustrates a wireframe view of an exemplary **96** well assembled assay device. The 96 wells in the illustrated exemplary device are arranged in two concentric circular rows about a center point which contains a real or virtual LED source **1**. The locations of the wells **45** along the two rows are furthermore offset with regard to one another, so that a clear optical path to the outer wells from the real or virtual LED source **1** exists. Finally, there need not be any moving parts in the assay device, and moreover the entire device can be microprocessor controlled and DC powered.

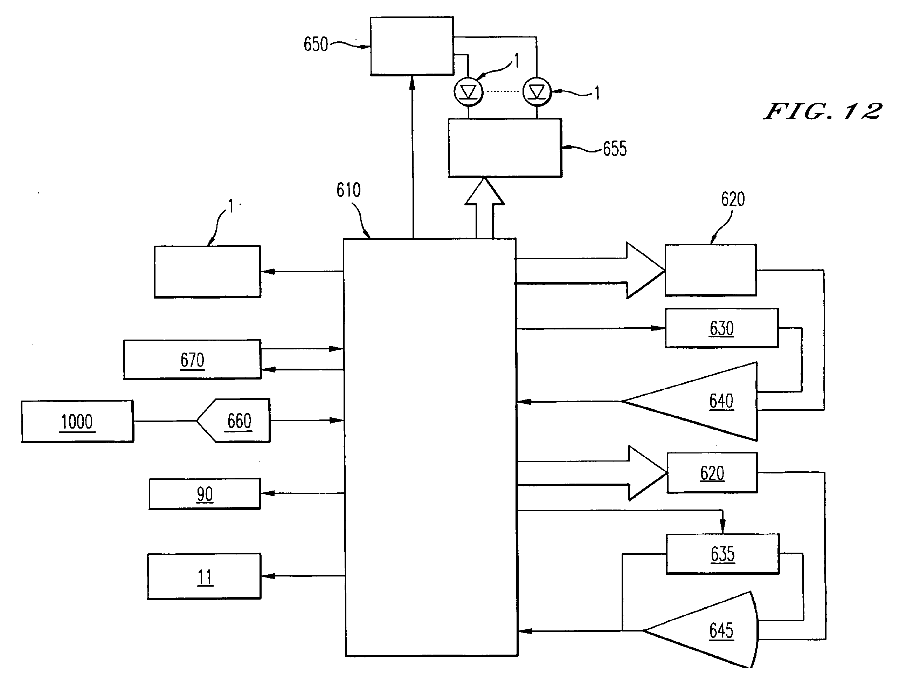

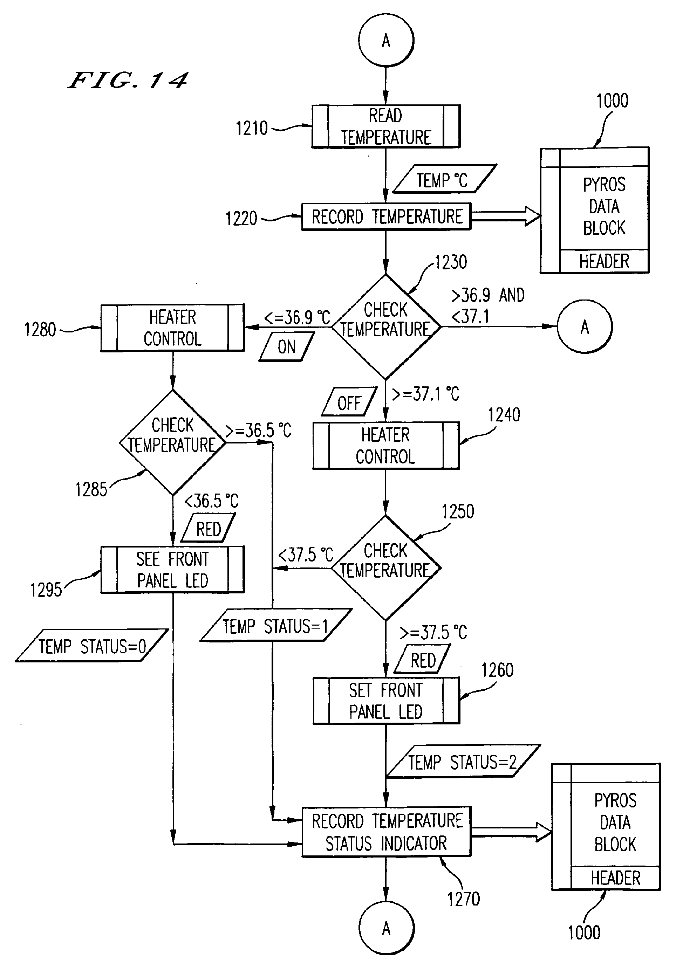

FIG. 12 illustrates an exemplary electronics block diagram of an assay device. As mentioned before, a single control/record processor **610** can be used to control operation of the elements of the assay device, as well as to record the results of the assays. For example, the resistance of thermistor **1000** can be measured by, e.g., placing thermistor **1000** in a bridge and digitizing a differential voltage across the bridge using an A/D convertor **660**. The digitized differential voltage can be relayed to the control/record processor **610** which might have access to, e.g., a look-up table that associates certain differential voltages with certain temperatures. An exemplary commercially available control/record processor **610** is the Motorola P/N MC68HC711E9FN3. The control/record processor **610** can then compare the digitized differential voltage with a reference value, and increase and/or decrease the power output to heater **90** as needed. This will be discussed in more detail in regard to FIG. 14.

Another method of determining a temperature is through the use of a manufacturer-calibrated thermistor **1000.** An R-T look-up table is provided by the manufacturer for such devices. In this case, the A/D converter **660** measures an absolute potential drop and hence resistance across the thermistor **1000**.

Another function of the control/record processor **610** is implemented using a digital connection to an LED source **1** intensity controller **650**. This intensity controller **650** can receive digital intensity control signals from the control/record processor **610** and use them to increase and/or decrease the bias voltage applied to one or more of the LED sources **1**. This will be done, e.g., when an analyte holding vessel **40** is newly inserted into a particular well **45**, or when an the light received by a light transducer **75** is too low in intensity for an accurate measurement to be made by a light transducer **75**. The intensity controller **650** can also be used to modulate the bias voltage applied to the LED sources **1** as needed.

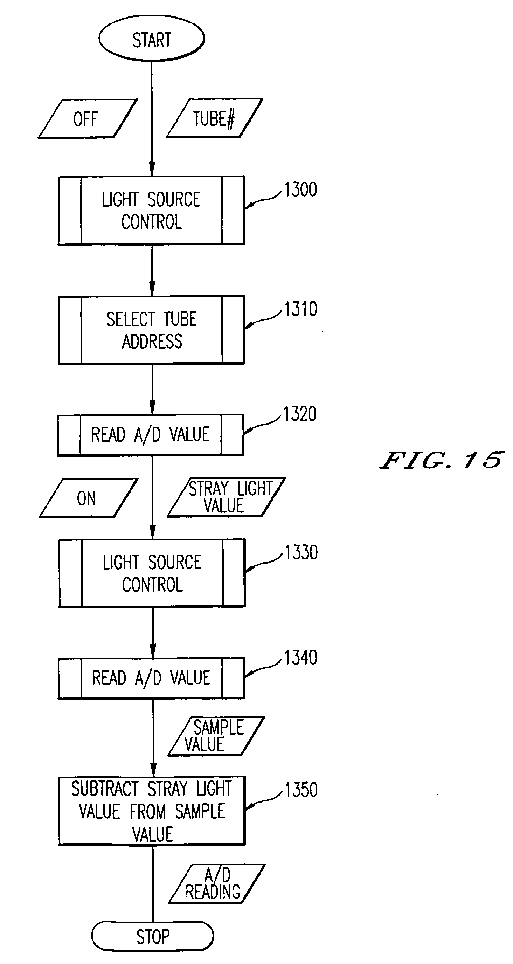

In order for the applied bias voltage to effect a light emission from the LED sources **1**, a suitable voltage across the LED sources **1** must exist (i.e., the LED sources **1** must be forward biased). This too can be determined by the control/record processor **610**, which uses a light source multiplexer **655** to selectively complete a return electrical current path through one or more particular LED sources **1**. The light source multiplexer **655** can selectively forward bias an LED source **1** in response to, e.g., the insertion of an analyte holding vessel **40** into a particular well **45** serviced by an LED source **1**, the selection of a certain assay wavelength by an operator corresponding to the emission of LED source **1**, or simply to effect an on/off modulation as described in more detail in FIG. 15.

A separate vessel detect light source **1** is illustrated in FIG. 12 for the sake of illustrating separate control of the vessel detect optical path when a dedicated radial light guide **30** is used to form light path **101**. This vessel detect light source **1** can also be formed by an LED and controlled using a light source multiplexer **655** and intensity controller **650** as described above.

Another way that the control/record processor **610** can respond to light transducer **75** receiving an insufficient light intensity is by changing an amplification gain for an amplifier associated with one or more light transducer(s) **75**. This can be done by transmitting a well select signal to well selection unit **620** along with a digital gain adjust signal to the gain adjuster **635**, which in turn can increase the gain of signal amplifier **645** for the selected well **45**. The well selection unit **620** can be formed of another multiplexer that selects the output of a particular well **45** for input to the signal amplifier **645**. Naturally, plural well selection units **620**, signal amplifiers **645**, and gain adjusters **635** can be used as well to produce a similar action.

A similar process can be used to adjust a light intensity cut-off level for determining when an analyte holding vessel **40** is present in one or more wells **45**. Digital level adjuster **630** can be used to set an appropriate voltage for the vessel detect comparator **640** that is midway between the output voltage of light transducer **65** when an analyte holding vessel **40** is present and the output voltage of light transducer **65** when an analyte holding vessel **40** is absent from a well **45**. A voltage set signal can be transmitted from control/record processor **610** to digital level adjuster **630** at the same time that the appropriate well is identified to well selection unit **620**. Once again, plural well selection units **620**, level adjusters **630**, and vessel detect comparators **640** can be used as well to produce a similar action.

The control/record processor **610** can also be used to generate a ready signal, and error signal, and/or other indicator signals for output to indicator **11**. The indicator **11** thus serves to provide operation information to an operator.

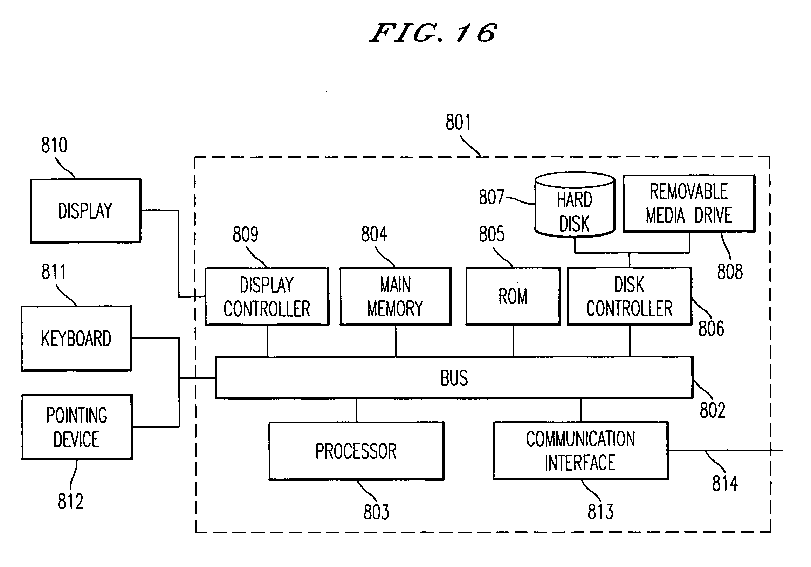

The control/record processor **610** can also be used to handle communications with another control/record processor **610**, an output and/or input device, and/or with one or more computer-readable memory devices by way of a communications port **670**. These functions will be discussed further in regard to FIG. 16.

FIGS. 13A-C illustrate a top view in the absence of an analyte holding vessel **40**, a top view in the presence of an analyte holding vessel **40**, and a side view in the presence of an analyte holding vessel **40** that uses an exemplary side wall tube detection scheme with a single radial light guide **30.** In the illustrated example, both the light paths **100** and **101** (as well as **102**) pass through a single radial light guide **30** with the light path **101** simply being displaced by some angle from light path **100** within the single radial light guide **30**. As illustrated, the side wall of the analyte holding vessel **40** deflects the path of light that travels down light path **101** without the analyte holding vessel **40** present in the well **45** to the light path **102** when the analyte holding vessel **40** is present in the well **45**. This configuration is particularly advantageous when a flat-bottomed analyte holding vessel **40** as illustrated in FIG. 13C is used.

Furthermore, the side wall detection scheme illustrated in FIGS. 13A-C provides two further advantages. When the analyte holding vessel **40** is a test tube, the side wall curvature is often manufactured to tighter tolerances than the radius of the bottom of these vessels. As such, more reliable detection of these vessels can be obtained. Furthermore, regardless of the type of analyte holding vessel **40**, sidewall detection allows the minimization of the length of light path **100**. Since light pipe **70** can be brought closer to the well **45**, the length of the light path **100** can be decreased, and the intensity of the light received by light pipe **70** increased.

FIG. 14 illustrates an exemplary process loop for monitoring and controlling the incubation temperature according to the present invention. In one embodiment, this process loop is performed at all times during operation of the assay device. In other words, an analyte holding vessel **40** need not be inserted into a well **45**. In step **1210**, the temperature is read using temperature transducing thermistor **1000** which can be precalibrated with corresponding temperature and resistances stored in a look-up table in computer-readable memory. Alternatively, temperature transducing thermistor **1000** can be linearized over a temperature range near a common incubation temperature such as 37.0°C. In either case, once a temperature (and/or corresponding resistance) has been determined, it is recorded in step **1220**. This can be done by writing to a computer readable memory, such as the illustrated Pyros data block **1000**. Recordation of the temperature in step **1220** need not always be performed. For example, in the case of a long assay time, only one in a certain number of measured temperatures need be recorded. Alternatively, if no analyte holding vessels **40** are located in a well **45**, then temperature need not be recorded.

In step **1230**, a determination is made as to whether the temperature read in step **1210** is within a certain range. In the illustrated process loop, if the read temperature is less than 37.1 °C and greater than 36.9°C, then the process flow returns to step **1210**, perhaps after a suitable delay. However, if the read temperature is less than 36.9°C, then the process flow proceeds to step **1280**, where the heater control indicates that the power to the heater **90** should be increased. In step **1285**, another determination is made as to whether the temperature read in step **1210** falls within a certain range. The determination in step **1285** is made to determine whether a critical temperature situation due to underheating exists. For example, if the read temperature is less than 36.5 °C, then a critical situation is indicated to the operator by setting a front panel LED indicator to red in step **1295**. The assay device also sets an internal status indicator to a value, e.g., 0, that indicates the presence of a critical temperature situation due to underheating. After the critical temperature situation is indicated to both the user and/or other portions of the device, both the temperature and status is recorded in step **1270** by writing to, e.g., the illustrated Pyros data block **1000**. After recordation of the temperature and status, the process flow loops back to step **1210**.

In step **1235**, if it is determined that a critical temperature situation does not exist, then the process flow proceeds to step **1270** without indicating a critical temperature situation to the user and/or other portions of the device. Once again, both the temperature and status can be recorded in step **1270** as needed by writing to, e.g., the illustrated Pyros data block **1000**. After recordation of the temperature and status, the process flow loops back to step **1210**.

In step **1230**, if the read temperature is greater than 37.1 °C, then the process flow proceeds to step **1240**, where the heater control indicates that the power to the heater **90** should be decreased and/or cut off. In step **1250**, another determination is made as to whether the temperature read in step **1210** falls within a certain range. The determination in step **1250** is made to determine whether a critical temperature situation due to overheating exists. For example, if the read temperature is greater than 37.5 °C, then a critical situation is indicated to the operator by setting a front panel LED indicator to red in step **1260**. The assay device also sets an internal status indicator to a value, e.g., 2, that indicates the presence of a critical temperature situation due to overheating. After the critical temperature situation is indicated to both the user and/or other portions of the device, both the temperature and status can be recorded in step **1270** by writing to, e.g., the illustrated Pyros data block **1000**. After recordation of the temperature and status, the process flow loops back to step **1210**.

In step **1250**, if it is determined that a critical temperature situation does not exist, then the process flow proceeds to step **1270** without indicating a critical temperature situation to the user and/or other portions of the device. Once again, both the temperature and status can be recorded in step **1270** by writing to, e.g., the illustrated Pyros data block **1000**. After recordation of the temperature and status, the process flow loops back to step **1210**.

FIG. 15 illustrates a process flow for an exemplary on/off modulation of the light output by LED source **1** for background correction. In the on/off modulation, a background light level is first determined for a particular light transducer, and then a transmitted light measurement is performed. The background level can thus be subtracted out, and more accurate measurements made. In step **1300**, a LED source **1** that provides the majority of the illumination for a particular well **45** is shut off. In a preferred embodiment, a particular well **45** already has an analyte holding vessel **40** inserted therein. The particular well **45** can be operator-identified, or the instrument can constantly cycle around all available (e.g., filled) wells **45** and the particular well **45** can just happen to be a next well in line. In either case, the address of the particular well **45** is selected in step **1310** so that a background output of the light transducer **75** (and even a light transducer **65**, as needed) can be digitized and/or otherwise processed for storage. Thereafter, in step **1320**, the background output of the light transducer **75** is read and/or digitized. After information related to the background output of the light transducer **75** has been stored, the process flow proceeds to step **1330** where the LED source **1** that provides the majority of the illumination for a particular well **45** is turned on. The light transmitted through the analyte holding vessel **40** when the LED source 1 is turned on is termed the "sample value." In step **1340**, one or more "sample values" are read over a period of time so that the contents of the analyte holding vessel **40** can be, e.g., turbidometrically and chromogenically assayed. Before the read "sample values" are, e.g., displayed and/or stored in a computer-readable memory, the read background output of the light transducer **75** is subtracted from the "sample values." Naturally, both the unchanged "sample values" and the read background output of the light transducer **75** can be stored and the subtraction operation performed, e.g., only upon the request of an operator.

Modulation of the intensity of emitted light from LED source **1** need not be implemented as described (single step on/off) in regard to FIG. 15. For example, a sinusoidal modulation of the output intensity of LED source **1** with phase locking can be used to discriminate between the light originating from a particular LED source **1** and background (including other LED sources **1**, provided the other sources aren't similarly modulated). As another example, the on/off modulation can occur continuously during assaying, so that a continuous measurement of background is made.

As another example of a useful modulation, the light emitted from LED source **1** can be controlled to follow a predetermined intensity as a function of time. This intensity as a function of time can be selected, e.g., to mimic the intensity as a function of time that would be observed if a particular assay were being performed. Thus, if all analyte holding vessels **40** are removed from the wells **45**, then the light from a single LED source **1** can be substantially uniformly transmitted to plural (or even all) light transducers **75** simultaneously. Thus, the measured intensities for each of the separate optical channels can be compared and each optical channel can be calibrated.

FIG. 16 illustrates a computer system **801** that can form an external control/record processor in an embodiment of the present invention. For example, computer system **801** can communicate with control/record processor **610** of FIG. 12 by way of communications port **670**.

Computer system **801** includes a bus **802** or other communication mechanism for communicating information, and a processor **803** coupled with bus **802** for processing the information. Computer system **801** also includes a main memory **804**, such as a random access memory (RAM) or other dynamic storage device (e.g., dynamic RAM (DRAM), static RAM (SRAM), synchronous DRAM (SDRAM), flash RAM), coupled to bus **802** for storing information and instructions to be executed by processor **803**. In addition, main memory **804** may be used for storing temporary variables or other intermediate information during execution of instructions to be executed by processor **803**. Computer system **801** further includes a read only memory (ROM) **805** or other static storage device (e.g., programmable ROM (PROM), erasable PROM (EPROM), and electrically erasable PROM (EEPROM)) coupled to bus **802** for storing static information and instructions for processor **803**. A storage device **807** and/or **808**, such as a magnetic disk or optical disk, is provided and coupled to bus **802** by way of a disk controller **806** for storing information and instructions. Storage device **807** and/or **808** can contain the tables that record operating and/or measurement information, such as the Pyros data block **1000** of FIG. 14.

The computer system **801** may also include special purpose logic devices (e.g., application specific integrated circuits (ASICs)) or configurable logic devices (e.g., generic array of logic (GAL) or reprogrammable field programmable gate arrays (FPGAs)). Other removable media devices (e.g., a compact disc, flash memory cards, a tape, and a removable magneto-optical media) or further fixed, high density media drives, may be added to the computer system **801** using an appropriate device bus (e.g., a small computer system interface (SCSI) bus, an enhanced integrated device electronics (IDE) bus, or an ultra-direct memory access (DMA) bus). Such removable media devices and fixed, high density media drives can also contain the tables that record operating and/or measurement information, such as the Pyros data block **1000** of FIG. 14. The computer system **801** may additionally include a compact disc reader, a compact disc reader-writer unit, or a compact disc juke box, each of which may be connected to the same device bus or another device bus.

Computer system **801** may be coupled via bus **802** to a display **810**, such as a cathode ray tube (CRT), for displaying information to a computer user. Display **810** can perform the functions of an indicator **11** as seen in FIG. 12, especially when the assay device is operated remotely from the computer system **801**. The display **810** may be controlled by a display or graphics card. The computer system includes input devices, such as a keyboard **811** and a pointing device **812** (e.g., a cursor control), for communicating information and command selections to processor **803**. The pointing device **812** (e.g., cursor control), for example, is a mouse, a trackball, or cursor direction keys for communicating direction information and command selections to processor **803** and for controlling cursor movement on the display **810**.

The computer system **801** can perform a portion or all of the processing steps of the invention in response to processor **803** executing one or more sequences of one or more instructions contained in a memory, such as the main hard disk memory **807**. Such instructions may be read into the main hard disk memory **807** from another computer readable medium, such as storage device **808**. One or more processors in a multi-processing arrangement may also be employed to execute the sequences of instructions contained in main hard disk memory **807**. In alternative embodiments, hard-wired circuitry may be used in place of or in combination with software instructions. Thus, embodiments are not limited to any specific combination of hardware circuitry and software.

As stated above, the system **801** includes at least one computer readable medium or memory programmed according to the teachings of the invention and for storing data structures, tables, records, or other data described herein. Examples of computer readable media are compact discs, hard disks, floppy disks, tape, magneto-optical disks, PROMs (EPROM, EEPROM, Flash EPROM), DRAM, SRAM, SDRAM, etc. Stored on any one or on a combination of computer readable media, the present invention includes software for controlling the computer system **801**, for driving a device or devices for implementing the invention, and for enabling the computer system **801** to interact with a human user. Such software may include, but is not limited to, device drivers, operating systems, development tools, and applications software. Such computer readable media further includes the computer program product of the present invention for performing all or a portion (if processing is distributed) of the processing performed in implementing the invention.

The computer code devices of the present invention may be any interpreted or executable code mechanism, including but not limited to scripts, interpreters, dynamic link libraries, Java classes, and complete executable programs. Moreover, parts of the processing of the present invention may be distributed for better performance, reliability, and/or cost.

The term "computer readable medium" as used herein refers to any medium or media that participate in recording data and/or providing instructions to processor **803** for execution. A computer readable medium may take many forms, including but not limited to, non-volatile media, volatile media, and transmission media. Non-volatile media includes, for example, optical, magnetic disks, and magneto-optical disks, such as storage device **807** and/or **808**. Transmission media includes coaxial cables, copper wire and fiber optics, including the wires that comprise bus **802**. Transmission media also may also take the form of acoustic or light waves, such as those generated during radio wave and infrared data communications.

Common forms of computer readable media include, for example, hard disks, floppy disks, tape, magneto-optical disks, PROMs (EPROM, EEPROM, Flash EPROM), DRAM, SRAM, SDRAM, or any other magnetic medium, compact disks (e.g., CD-ROM), or any other optical medium, punch cards, paper tape, or other physical medium with patterns of holes, a carrier wave (described below), or any other medium from which a computer can read.

Various forms of computer readable media may be involved in carrying out one or more sequences of one or more instructions to processor **803** for execution. For example, the instructions may initially be carried on a magnetic disk of a remote computer. The remote computer can load the instructions for implementing all or a portion of the present invention remotely into a dynamic memory and send the instructions over a telephone line using a modem. A modem local to computer system **801** may receive the data on the telephone line and use an infrared transmitter to convert the data to an infrared signal. An infrared detector coupled to bus **802** can receive the data carried in the infrared signal and place the data on bus **802**. Bus **802** carries the data to main hard disk memory **807**, from which processor **803** retrieves and executes the instructions. The instructions received by main hard disk memory **807** may optionally be stored on a removable media storage device **808** either before or after execution by processor **803**.

Computer system **801** also includes a communication interface **813** coupled to bus **802**. Communication interface **813** can be connected to communication port **670** of an internal control/record processor **610**, or internal control/record processor **610** can be eliminated in whole or in part and the communication interface **813** can conduct direct communications with, e.g., level adjuster **630** and gain adjuster **635**. In any such implementation, communication interface **813** sends and receives electrical, electromagnetic, or optical signals that carry data representing various types of information.

Obviously, numerous modifications and variations of the present invention are possible in light of the above teachings. It is therefore to be understood that within the scope of the appended claims, the invention may be practiced otherwise than as specifically described herein.

## Claims

1. An assay device, comprising:
plural vessel receiving means (45) for receiving a plurality of analyte vessels (40), each said means for receiving disposed around a radial waveguide means;
a plurality of light transducer means (65, 75) for transducing a portion of a light radially distributed by said radial waveguide means that has passed through respective of said analyte vessels; and
a centralized means (1) for generating said light, wherein said plural vessel receiving means are disposed in a substantially circular geometry around said centralized means for generating light; **characterized in that**:
said radial waveguide means (30) is adapted to receive a portion of said light and to radially transmit it toward a perimeter of said radial waveguide means for obtaining a substantially even distribution of said portion of said light along said perimeter.

2. The assay device according to claim 1, further comprising:
a second means for generating a second light;
second radial waveguide means for receiving a portion of said second light generated by said second means for generating and radially distributing said portion of said second light to said plurality of vessel wells; and
a second plurality of light transducer means for transducing a portion of said second light radially distributed by said second radial waveguide means that has passed through respective of said plural vessel receiving means.

3. The assay device according to claim 2, wherein said second radial waveguide means comprises a plurality of wedge waveguide means.

4. The assay device according to claim 1, wherein said radial waveguide means comprises a plurality of wedge waveguide means.

5. The assay device according to claim 4, wherein each of said plurality of wedge waveguide means comprises a curved wedge waveguide.

6. The assay device according to claim 4, wherein each of said plurality of wedge waveguide means comprises a lensmatic wedge waveguide means.

7. The assay device according to claim 1, further comprising a second plurality of light transducer means for transducing a portion of said light radially distributed by said radial waveguide means that has passed through said vessel receiving means.

8. The assay device according to claim 7, wherein said second plurality of light transducer means transduces light that has passed through a side portion of said vessel receiving means.

9. The assay device according to claim 7, wherein said second plurality of light transducer means transduces light that has passed through a bottom portion of said vessel receiving means.

10. The assay device according to claim 7, wherein said second plurality of light transducer means comprises transducer means for detecting a presence of said analyte vessel in said vessel receiving means.

11. The assay device according to claim 1, further comprising a means for modulating an intensity of said light generated by said centralized means for generating said light.

12. The assay device according to claim 11, wherein said means for modulating comprises a control processor.

13. The assay device according to claim 11, wherein said means for modulating comprises a means for turning on and off said centralized means for generating said light.

14. The assay device according to claim 1, wherein said centralized means for generating light comprises a LED source.

15. The assay device according to claim 14, wherein said LED source generates light having a wavelength in a range of 430 to 470 nm.

16. The assay device according to claim 14, wherein LED source generates light having a wavelength less than 720 nm.

17. The assay device according to claim 1, further comprising a means for filtering light.

18. The assay device according to claim 17, wherein said means for filtering is disposed along an optical path between said centralized means for generating said light and said radial waveguide means.

19. The assay device according to claim 1, wherein said plural vessel receiving means comprise two concentric circular rows of vessel wells around said centralized means for generating light, wherein said vessel wells of said two concentric circular rows are staggered to receive said light radially distributed by said radial waveguide means.

20. The assay device according to claim 1, further comprising a plurality of means for reflecting and conducting said transmitted portion of said light that has passed through said vessel receiving means to said plurality of light transducer means.

21. The assay device according to claim 20, wherein said means for reflecting and conducting are configured to reflect said transmitted portion of said light that has passed through said means for receiving downward.

22. The assay device according to claim 21, wherein said plurality of light transducer means are disposed in a single plane.

23. The assay device according to claim 1, further comprising a single means (300) for supporting said plurality of light transducer means.

24. The assay device according to claim 23, wherein said single means for supporting is located below and substantially parallel with said radial waveguide means.

25. The assay device according to claim 1, further comprising a plurality of supporting means for supporting said plurality of light transducer means.

26. The assay device according to claim 1, further comprising a supporting means for supporting said plural vessel receiving means.

27. The assay device according to claim 26, wherein said means for supporting comprises:
heat conducting means for conducting heat to said analyte vessel in said plural vessel receiving means; and
heating means for maintaining said heat conducting means substantially at an incubation temperature.

28. The assay device according to claim 27, wherein said heating means comprises a DC heating means.

29. The assay device according to claim 27, wherein:
said heating means and said heat conducting means are annular.

30. The assay device according to claim 29, wherein said annular heating means is disposed around said annular heat conducting means.

31. The assay device according to claim 27, further comprising a precalibrated transducing temperature means disposed within said heat conducting means.

32. The assay device according to claim 27, wherein said means for supporting further comprises:
insulating means for thermally insulating said heat conducting means.

33. The assay device according to claim 1, further comprising a precalibrated temperature transducing means.

34. The assay device according to claim 1, wherein the radial waveguide means comprises waveguide means of circular shape.

35. The assay device according to claim 1, wherein the radial waveguide means comprises a plurality of waveguide means.

36. The assay device according to claim 1, wherein the centralized means for generating light comprises a light source having a bandwidth of at least 60nm.

37. The assay device according to claim 20 wherein the means for reflecting and conducting are light pipes.

38. The assay device according to claim 24,25 or 26 wherein the supporting means is a printed circuit board.

39. A method for performing assays comprising:
generating a light with a central light source;
arranging a plurality of vessels in a substantial circular geometry around said central light source;
radially guiding a portion of said light with a radial waveguide means (30) toward a perimeter thereof for obtaining a substantially even distribution of said portion of said light along said perimeter;
transmitting a portion of said guided light through a plurality of said vessels (45); and
transducing a portion of the transmitted light to perform an assay.

40. The method according to claim 39, further comprising modulating an intensity of said portion of the transmitted light.

41. The method according to claim 40, wherein said modulating step comprises modulating a generated light intensity.

42. The method according to claim 41, wherein said modulating step comprises alternatively starting and stopping said generating of the light.

43. The method according to claim 42, further comprising correcting for a background light intensity.

## Patentansprüche

1. Assay-Vorrichtung, umfassend:
mehrere Gefäß-Aufnahmeeinrichtungen (45) zum Aufnehmen einer Vielzahl von Analytengefäßen (40), wobei jede Einrichtung zum Aufnehmen um eine radiale Wellenleitereinrichtung herum angeordnet ist,
eine Vielzahl von Lichtwandlereinrichtungen (65, 75) zum Wandeln eines Teils eines von der radialen Wellenleitereinrichtung radial verteilten Lichts, der durch das jeweilige der Analytengefäße gegangen ist, und
eine zentrale Einrichtung (1) zum Erzeugen des Lichts, wobei die Vielzahl von Gefäß-Aufnahmeeinrichtungen in einer im Wesentlichen kreisförmigen Geometrie um die zentrale Einrichtung zum Erzeugen von Licht herum angeordnet ist,
**dadurch gekennzeichnet, dass** die radiale Wellenleitereinrichtung (30) so eingerichtet ist, dass sie einen Teil des Lichts empfängt und diesen radial in Richtung eines Umfangs der radialen Wellenleitereinrichtung sendet, um eine im Wesentlichen gleichmäßige Verteilung des Teils des Lichts entlang dem Umfang zu erreichen.

2. Assay-Vorrichtung nach Anspruch 1, die des Weiteren umfasst:
eine zweite Einrichtung zum Erzeugen eines zweiten Lichts,
eine zweite radiale Wellenleitereinrichtung zum Empfangen eines Teils des durch die zweite Einrichtung zum Erzeugen erzeugten Lichts und zum radialen Verteilen des Teils des zweiten Lichts zu der Vielzahl von Gefäßschächten und
eine zweite Vielzahl von Lichtwandlereinrichtungen zum Wandeln eines Teils des durch die zweite radiale Wellenleitereinrichtung radial verteilten zweiten Lichts, der durch die jeweilige der Vielzahl von Gefäß-Aufnahmeeinrichtungen gegangen ist.

3. Assay-Vorrichtung nach Anspruch 2, wobei die zweite radiale Wellenleitereinrichtung eine Vielzahl von Keil-Wellenleitereinrichtungen umfasst.

4. Assay-Vorrichtung nach Anspruch 1, wobei die radiale Wellenleitereinrichtung eine Vielzahl von Keil-Wellenleitereinrichtungen umfasst.

5. Assay-Vorrichtung nach Anspruch 4, wobei jede der Vielzahl von Keil-Wellenleitereinrichtungen einen gekrümmten Keil-Wellenleiter umfasst.

6. Assay-Vorrichtung nach Anspruch 4, wobei jede der Vielzahl von Keil-Wellenleitereinrichtungen eine Linsen-Keil-Wellenleitereinrichtung umfasst.

7. Assay-Vorrichtung nach Anspruch 1, die des Weiteren eine zweite Vielzahl von Lichtwandlereinrichtungen zum Wandeln eines Teils des durch die radiale Wellenleitereinrichtung radial verteilten Lichts, der durch die Gefäß-Aufnahmeeinrichtungen gegangen ist, umfasst.

8. Assay-Vorrichtung nach Anspruch 7, wobei die zweite Vielzahl von Lichtwandlereinrichtungen Licht wandelt, das durch einen Seitenbereich der Gefäß-Aufnahmeeinrichtungen gegangen ist.

9. Assay-Vorrichtung nach Anspruch 7, wobei die zweite Vielzahl von Lichtwandlereinrichtungen Licht wandelt, das durch einen Bodenbereich der Gefäß-Aufnahmeeinrichtung gegangen ist.

10. Assay-Vorrichtung nach Anspruch 7, wobei die zweite Vielzahl von Lichtwandlereinrichtungen Wandlereinrichtungen zum Detektieren eines Vorhandenseins des Analytengefäßes in der Gefäß-Aufnahmeeinrichtung umfasst.

11. Assay-Vorrichtung nach Anspruch 1, die des Weiteren eine Einrichtung zum Regulieren einer Stärke des Lichts, das durch die zentrale Einrichtung zum Erzeugen des Lichts erzeugt wird, umfasst.

12. Assay-Vorrichtung nach Anspruch 11, wobei die Einrichtung zum Regulieren einen Steuerprozessor umfasst.

13. Assay-Vorrichtung nach Anspruch 11, wobei die Einrichtungen zum Regulieren eine Einrichtung zum An- und Abschalten der zentralen Einrichtung zum Erzeugen von Licht umfasst.

14. Assay-Vorrichtung nach Anspruch 1, wobei die zentrale Einrichtung zum Erzeugen von Licht eine LED-Quelle umfasst.

15. Assay-Vorrichtung nach Anspruch 14, wobei die LED-Quelle Licht mit einer Wellenlänge in einem Bereich von 430 nm bis 470 nm erzeugt.

16. Assay-Vorrichtung nach Anspruch 14, wobei die LED-Quelle Licht mit einer Wellenlänge von weniger als 720 nm erzeugt.

17. Assay-Vorrichtung nach Anspruch 1, die des Weiteren eine Einrichtung zum Filtern von Licht umfasst.

18. Assay-Vorrichtung nach Anspruch 17, wobei die Einrichtung zum Filtern entlang einem optischen Pfad zwischen der zentralen Einrichtung zum Erzeugen des Lichts und der radialen Wellenleitereinrichtung angeordnet ist.

19. Assay-Vorrichtung nach Anspruch 1, wobei die Vielzahl von Gefäß-Aufnahmeeinrichtungen zwei konzentrische kreisförmige Reihen von Gefäßschächten um die zentrale Einrichtung zum Erzeugen von Licht herum umfasst, wobei die Gefäßschächte der zwei konzentrischen kreisförmigen Reihen versetzt sind, um das durch die radiale Wellenleitereinrichtung radial verteilte Licht zu empfangen.

20. Assay-Vorrichtung nach Anspruch 1, die des Weiteren eine Vielzahl von Einrichtungen zum Reflektieren und Leiten des gesendeten Teils des Lichts, der durch die Gefäß-Aufnahmeeinrichtungen gegangen ist, zu der Vielzahl von Lichtwandlereinrichtungen umfasst.

21. Assay-Vorrichtung nach Anspruch 20, wobei die Einrichtungen zum Reflektieren und Leiten so konfiguriert sind, dass sie den gesendeten Teil des Lichts, der durch die Einrichtungen zum Aufnehmen gegangen ist, abwärts senden.

22. Assay-Vorrichtung nach Anspruch 21, wobei die Vielzahl von Lichtwandlereinrichtungen in einer einzelnen Ebene angeordnet ist.

23. Assay-Vorrichtung nach Anspruch 1, die des Weiteren eine Einzeleinrichtung (300) zum Tragen der Vielzahl von Lichtwandlereinrichtungen umfasst.

24. Assay-Vorrichtung nach Anspruch 23, wobei die Einzeleinrichtung zum Tragen unter der radialen Wellenleitereinrichtung und im Wesentlichen mit dieser parallel angeordnet ist.

25. Assay-Vorrichtung nach Anspruch 1, die des Weiteren eine Vielzahl von Trageinrichtungen zum Tragen der Vielzahl von Lichtwandlereinrichtungen umfasst.

26. Assay-Vorrichtung nach Anspruch 1, die des Weiteren eine Trageinrichtung zum Tragen der Vielzahl von Gefäß-Aufnahmeeinrichtungen umfasst.

27. Assay-Vorrichtung nach Anspruch 26, wobei die Trageinrichtung umfasst:
eine Wärmeleiteinrichtung zum Leiten von Wärme zu dem Analytengefäß in der Vielzahl von Gefäß-Aufnahmeeinrichtungen und
eine Heizungseinrichtung zum Vorhalten der Wärmeleiteinrichtungen im Wesentlichen auf einer Inkubationstemperatur.

28. Assay-Vorrichtung nach Anspruch 27, wobei die Heizungseinrichtung eine Gleichstromheizungseinrichtung umfasst.

29. Assay-Vorrichtung nach Anspruch 27, wobei die Heizungseinrichtung und die Wärmeleiteinrichtung ringförmig sind.

30. Assay-Vorrichtung nach Anspruch 29, wobei die ringförmige Heizungseinrichtung um die ringförmige Wärmeleiteinrichtung herum angeordnet ist.

31. Assay-Vorrichtung nach Anspruch 27, die des Weiteren eine vorkalibrierte Wandlungstemperatureinrichtung, angeordnet in der Wärmeleiteinrichtung, umfasst.

32. Assay-Vorrichtung nach Anspruch 27, wobei die Trageinrichtung des Weiteren eine Isolationseinrichtung zum thermischen Isolieren der Wärmeleiteinrichtung umfasst.

33. Assay-Vorrichtung nach Anspruch 1, die des Weiteren eine vorkalibrierte Temperaturwandlungseinrichtung umfasst.

34. Assay-Vorrichtung nach Anspruch 1, wobei die radiale Wellenleitereinrichtung ringförmige Wellenleitereinrichtungen umfasst.

35. Assay-Vorrichtung nach Anspruch 1, wobei die radiale Wellenleitereinrichtung eine Vielzahl von Wellenleitereinrichtungen umfasst.

36. Assay-Vorrichtung nach Anspruch 1, wobei die zentrale Einrichtung zum Erzeugen von Licht eine Lichtquelle mit einer Bandbreite von wenigstens 60 nm umfasst.

37. Assay-Vorrichtung nach Anspruch 20, wobei die Einrichtungen zum Reflektieren und Leiten Lichtröhren sind.

38. Assay-Vorrichtung nach Anspruch 24, 25 oder 26, wobei die Trageinrichtung eine Leiterplatte ist.

39. Verfahren zum Durchführen von Assays, das umfasst:
Erzeugen eines Lichts mit einer zentralen Lichtquelle,
Anordnen einer Vielzahl von Gefäßen in einer im Wesentlichen kreisförmigen Geometrie um die zentrale Lichtquelle herum,
radiales Leiten eines Teils des Lichts mit einer radialen Wellenleitereinrichtung (30) in Richtung auf einen Umfang davon, um eine im Wesentlichen gleichmäßige Verteilung des Teils des Lichts entlang dem Umfang zu erreichen,
Senden eines Teils des geleiteten Lichts durch eine Vielzahl der Gefäße (45) und
Wandeln eines Teils des gesendeten Lichts, um einen Assay durchzuführen.

40. Verfahren nach Anspruch 39, das des Weiteren das Regulieren einer Stärke des Teils des gesendeten Lichts umfasst.

41. Verfahren nach Anspruch 40, wobei der Regulierungsschritt das Regulieren einer erzeugten Lichtstärke umfasst.

42. Verfahren nach Anspruch 41, wobei der Regulierungsschritt das alternative Beginnen und Beenden des Erzeugens des Lichts umfasst.

43. Verfahren nach Anspruch 42, das des Weiteren das Korrigieren einer Hintergrundlichtstärke umfasst.

## Revendications

1. Dispositif d'analyse, comprenant:
des moyens de logement de conteneurs multiples (45) permettant de recevoir une pluralité de conteneurs d'analyte (40), chacun desdits moyens de logement étant disposé autour d'un moyen de guide d'ondes radial;
une pluralité de moyens de transducteurs de lumière (65, 75) pour transduire une partie d'une lumière, distribuée de manière radiale par ledit moyen de guide d'ondes radial, qui est passée à travers les conteneurs respectifs ; et
un moyen centralisé (1) pour générer ladite lumière, dans lequel lesdits moyens de logement de conteneurs multiples sont disposés selon une géométrie essentiellement circulaire autour dudit moyen centralisé pour générer la lumière ;
**caractérisé en ce que**
ledit moyen de guide d'ondes radial (30) est adapté à recevoir une partie de ladite lumière et à la transmettre de manière radiale vers un périmètre dudit moyen de guide d'ondes radial pour obtenir une distribution essentiellement uniforme de la dite partie de ladite lumière le long dudit périmètre.

2. Dispositif d'analyse selon la revendication 1, comprenant en outre:
un second moyen permettant de générer une seconde lumière ;
un second moyen de guide d'ondes radial permettant de recevoir une partie de ladite seconde lumière générée par ledit second moyen de génération et de distribuer de manière radiale ladite partie de ladite seconde lumière vers ladite pluralité de puits de conteneurs ; et
une seconde pluralité de moyens de transducteurs de lumière pour transduire une partie de ladite seconde lumière, distribuée de manière radiale par ledit second moyen de guide d'ondes radial, qui est passée à travers un moyen respectif desdits moyens de logement de conteneurs multiples.

3. Dispositif d'analyse selon la revendication 2, dans lequel ledit second moyen de guide d'ondes radial comprend une pluralité de moyens de guides d'ondes triangulaires.

4. Dispositif d'analyse selon la revendication 1, dans lequel ledit moyen de guide d'ondes radial comprend une pluralité de moyens de guides d'ondes triangulaires.

5. Dispositif d'analyse selon la revendication 4, dans lequel chacune desdites pluralités de moyens de guides d'ondes triangulaires comprend un guide d'ondes triangulaire incurvé.

6. Dispositif d'analyse selon la revendication 4, dans lequel chacune desdites pluralités de moyens de guides d'ondes triangulaires comprend un moyen de guide d'ondes triangulaire faisant office de lentille.

7. Dispositif d'analyse selon la revendication 1, comprenant en outre une seconde pluralité de moyens de transducteurs de lumière pour transduire une partie de ladite lumière, distribuée de manière radiale par ledit moyen de guide d'ondes radial, qui est passée à travers lesdits moyens de logement de conteneurs.

8. Dispositif d'analyse selon la revendication 7, dans lequel ladite seconde pluralité de moyens de transducteurs de lumière transduit la lumière qui est passée à travers une partie latérale desdits moyens de logement de conteneurs.

9. Dispositif d'analyse selon la revendication 7, dans lequel ladite seconde pluralité de moyens de transducteurs de lumière transduit la lumière qui est passée à travers une partie du fond desdits moyens de logement de conteneurs.

10. Dispositif d'analyse selon la revendication 7, dans lequel ladite seconde pluralité de moyens de transducteurs de lumière comprend des moyens de transducteurs pour détecter une présence dudit conteneur d'analyte dans lesdits moyens de logement de conteneurs.

11. Dispositif d'analyse selon la revendication 1, comprenant en outre un moyen pour moduler une intensité de ladite lumière générée par ledit moyen centralisé pour générer ladite lumière.

12. Dispositif d'analyse selon la revendication 11, dans lequel ledit moyen de modulation comprend un processeur de contrôle.

13. Dispositif d'analyse selon la revendication 11, dans lequel ledit moyen de modulation comprend un moyen permettant d'allumer et d'éteindre ledit moyen centralisé pour générer ladite lumière.

14. Dispositif d'analyse selon la revendication 1, dans lequel ledit moyen centralisé pour générer de la lumière comprend une source LED.

15. Dispositif d'analyse selon la revendication 14, dans lequel ladite source LED génère de la lumière dont la longueur d'onde est comprise entre 430 et 470 nm.

16. Dispositif d'analyse selon la revendication 14, dans lequel la source LED génère de la lumière dont la longueur d'onde est inférieure à 720 nm.

17. Dispositif d'analyse selon la revendication 1, comprenant en outre un moyen permettant de filtrer la lumière.

18. Dispositif d'analyse selon la revendication 17, dans lequel ledit moyen de filtrage est disposé le long d'un chemin optique entre ledit moyen centralisé de génération de ladite lumière et ledit moyen de guide d'ondes radial.

19. Dispositif d'analyse selon la revendication 1, dans lequel lesdits moyens de logement de conteneurs multiples comprennent deux rangées circulaires concentriques de puits de conteneurs autour dudit moyen centralisé de génération de la lumière, dans lequel lesdits puits de conteneurs desdites deux rangées circulaires concentriques sont décalées pour recevoir ladite lumière distribuée de manière radiale par ledit moyen de guide d'ondes radial.

20. Dispositif d'analyse selon la revendication 1, comprenant en outre une pluralité de moyens permettant de refléter et de conduire ladite partie transmise de ladite lumière qui est passée à travers lesdits moyens de logement de conteneurs vers ladite pluralité de moyens de transducteurs de lumière.

21. Dispositif d'analyse selon la revendication 20, dans lequel lesdits moyens de réflexion et de conduction sont configurés pour refléter ladite partie transmise de ladite lumière qui est passée à travers lesdits moyens de logement en direction du bas.

22. Dispositif d'analyse selon la revendication 21, dans lequel ladite pluralité de moyens de transducteurs de lumière est disposée dans un plan unique.

23. Dispositif d'analyse selon la revendication 1, comprenant en outre un moyen unique (300) de support pour supporter ladite pluralité de moyens de transducteurs de lumière.

24. Dispositif d'analyse selon la revendication 23, dans lequel ledit moyen unique de support est situé en dessous dudit moyen de guide d'ondes radial et est essentiellement parallèle à celui-ci.

25. Dispositif d'analyse selon la revendication 1, comprenant en outre une pluralité de moyens de support pour supporter ladite pluralité de moyens de transducteurs de lumière.

26. Dispositif d'analyse selon la revendication 1, comprenant en outre un moyen de support permettant de supporter lesdits moyens de logement de conteneurs multiples.

27. Dispositif d'analyse selon la revendication 26, dans lequel ledit moyen de support comprend :
un moyen de conduction thermique pour conduire la chaleur vers ledit conteneur d'analyte dans lesdits moyens de logement de conteneurs multiples ; et
un moyen de chauffage permettant de maintenir ledit moyen de conduction thermique essentiellement à une température d'incubation.

28. Dispositif d'analyse selon la revendication 27, dans lequel ledit moyen de chauffage comprend un moyen de chauffage à courant continu.

29. Dispositif d'analyse selon la revendication 27, dans lequel :
ledit moyen de chauffage et ledit moyen de conduction thermique sont annulaires.

30. Dispositif d'analyse selon la revendication 29, dans lequel ledit moyen de chauffage annulaire est disposé autour dudit moyen de conduction thermique annulaire.

31. Dispositif d'analyse selon la revendication 27, comprenant en outre un moyen de transduction de la température précalibré disposé à l'intérieur dudit moyen de conduction thermique.

32. Dispositif d'analyse selon la revendication 27, dans lequel ledit moyen de support comprend en outre :
un moyen d'isolation permettant d'isoler thermiquement ledit moyen de conduction thermique.

33. Dispositif d'analyse selon la revendication 1, comprenant en outre un moyen de transduction de la température précalibré.

34. Dispositif d'essai selon la revendication 1, dans lequel le moyen de guide d'ondes radial comprend des moyens de guides d'ondes de forme circulaire.

35. Dispositif d'analyse selon la revendication 1, dans lequel le moyen de guide d'ondes radial comprend une pluralité de moyens de guides d'ondes.

36. Dispositif d'analyse selon la revendication 1, dans lequel le moyen centralisé pour générer de la lumière comprend une source de lumière dont la largeur de bande est d'au moins 60 nm.

37. Dispositif d'analyse selon la revendication 20, dans lequel les moyens de réflexion et de conduction sont des conduits de lumière.

38. Dispositif d'analyse selon la revendication 24, 25 ou 26, dans lequel le moyen de support est une carte de circuit imprimé.

39. Procédé permettant de réaliser des analyses, comprenant les étapes consistant à :
générer une lumière avec une source de lumière centrale ;
agencer une pluralité de conteneurs selon une géométrie essentiellement circulaire autour de ladite source de lumière centrale ;
guider de manière radiale une partie de ladite lumière avec un moyen de guide d'ondes radial (30) vers un périmètre de celui-ci afin d'obtenir une distribution essentiellement uniforme de ladite partie de ladite lumière le long dudit périmètre ;
transmettre une partie de ladite lumière guidée à travers une pluralité desdits conteneurs (45) ; et
transduire une partie de la lumière transmise pour réaliser une analyse.

40. Procédé selon la revendication 39, comprenant en outre la modulation d'une intensité de ladite partie de la lumière transmise.

41. Procédé selon la revendication 40, dans lequel ladite étape de modulation comprend la modulation d'une intensité de la lumière générée.

42. Procédé selon la revendication 41, dans lequel ladite étape de modulation comprend une marche arrêt alternative de ladite génération de la lumière.

43. Procédé selon la revendication 42, comprenant en outre la correction d'une intensité de lumière d'arrière-plan.
